# EUROPEAN PATENT APPLICATION

(11) **EP 4 782 974 A1**
(43) Date of publication of application: **29.07.2026**
(21) Application number: 24919010.9
(22) Date of filing: 30.12.2024
(51) Int. Cl.: G06F 3/0481, G06F 11/30, G06N 20/00, G06F 18/26, G06F 3/0484

(54) **ELECTRONIC DEVICE AND MULTI-WINDOW LAYOUT GENERATION METHOD**

(30) Priority: 16.01.2024 KR 20240007000; 06.03.2024 KR 20240032125
(71) Applicant: Samsung Electronics Co., Ltd., Suwon-si, Gyeonggi-do 16677 (KR)
(72) Inventor: JEON, Kyeongjin, Suwon-si, Gyeonggi-do 16677 (KR); KANG, Doosuk, Suwon-si, Gyeonggi-do 16677 (KR); KIM, Hyeongseok, Suwon-si, Gyeonggi-do 16677 (KR); PARK, Sungkweon, Suwon-si, Gyeonggi-do 16677 (KR); SUH, Donghee, Suwon-si, Gyeonggi-do 16677 (KR)
(74) Representative: Gulde & Partner
(86) International application number: PCT/KR2024/021413
(87) International publication number: WO 2025/154986

(57) **Abstract**

An electronic device according to various embodiments of the present document may comprise: a display (730); a communication module (740); a memory (720); and at least one processor (710) operatively connected to the display, the communication module, and the memory. The memory may store instructions that are executed by the at least one processor and, when executed, cause the electronic device to execute a first application to display an execution screen of the first application on at least a partial area of the display. The memory may store instructions that cause the electronic device to: detect a first event for triggering configuration of a multi-window layout according to the execution of a second application while the first application is being executed; in response to the detection of the first event, generate a prompt including information related to the detected first event and a task request for requesting the configuration of the multi-window layout; and transfer the generated prompt to an AI model.

## Description

### [Technical Field]

The present document relates to an electronic device, and, for example, relates to a method in which the electronic device generates or changes a multi-window layout.

### [Background Art]

A generative artificial intelligence model (AI model) refers to an artificial intelligence model that generates new information and sentences by learning various data. The generative AI model (hereinafter, AI model) is utilized for natural language processing, understands a context from given information, and can perform various language tasks. For example, a user may generate a prompt to perform a desired task and input the prompt into AI, and such a prompt may serve to induce the AI model to perform the task desired by the user.

Meanwhile, electronic devices such as a smart phone, a tablet PC, or an extended reality (XR) device can simultaneously execute a plurality of applications, and execution screens of the applications being executed may be configured as a multi-window layout and displayed. Here, the multi-window layout may refer to a method of dividing an entire display area and displaying each application screen in each window.

### [Disclosure of Invention]

### [Technical Problem]

In order to configure a screen with a multi-window layout, a plurality of input processes such as a process in which a user selects an application desired for simultaneous execution are required. In addition, also in a case of desiring to change a layout such as adding a new application after executing applications in multi-windows, or changing a position and/or a size of each window, the user may have to go through a plurality of input processes.

### [Solution to Problem]

An electronic device according to the present disclosure (or specification, invention) may comprise a display 730, a communication module 740, a memory 720, and at least one processor 710 operatively connected to the display, the communication module, and the memory.

According to an embodiment, the memory may store instructions that are executed by the at least one processor, and, when executed, cause the electronic device to execute a first application to display an execution screen of the first application on at least a partial area of the display.

According to an embodiment, the memory may store instructions that cause the electronic device, in a state in which the first application is being executed, to detect a first event triggering a configuration of a multi-window layout according to execution of a second application, in response to the detection of the first event, to generate a prompt including information related to the detected first event and a task request for requesting the configuration of the multi-window layout, and to deliver the generated prompt to an AI model.

According to an embodiment, the memory may store instructions that cause the electronic device to receive, from the AI model, a task response comprising information related to a multi-window layout to be configured in response to the first event, and based on the received task response, to configure a multi-window layout comprising the execution screen of the first application and an execution screen of the second application, to display the multi-window layout on at least a partial area of the display.

A method performed by an electronic device, according to various embodiments of the present document, may comprise: executing a first application to display an execution screen of the first application; in a state in which the first application is being executed, detecting a first event triggering a configuration of a multi-window layout according to execution of a second application; in response to the detection of the first event, generating a prompt including information related to the detected first event and a task request for requesting the configuration of the multi-window layout; delivering the generated prompt to an AI model; receiving, from the AI model, a task response including information related to a multi-window layout to be configured in response to the first event; and based on the received task response, configuring a multi-window layout comprising the execution screen of the first application and the execution screen of the second application, to display the multi-window layout.

A computer-readable non-transitory recording medium, according to various embodiments of the present document, may store instructions for performing: executing a first application to display an execution screen of the first application; in a state in which the first application is being executed, detecting a first event triggering a configuration of a multi-window layout according to execution of a second application; in response to the detection of the first event, generating a prompt including information related to the detected first event and a task request for requesting the configuration of the multi-window layout; delivering the generated prompt to an AI model; receiving, from the AI model, a task response including information related to a multi-window layout to be configured in response to the first event; and based on the received task response, configuring a multi-window layout comprising the execution screen of the first application and the execution screen of the second application, to display the multi-window layout.

### [Advantageous Effects of Invention]

According to various embodiments of the present document, by requesting an AI model to perform a task for multi-window layout configuration, and configuring a multi-window layout based on a task response of the AI model, an electronic device and a multi-window layout generation method capable of configuring an appropriate multi-window layout meeting a user's intention may be provided.

### [Brief Description of Drawings]

In connection with the description of the drawings, the same or similar reference numerals may be used for the same or similar constituent elements.
FIG. 1 is a block diagram of an electronic device within a network environment, according to various embodiments.
FIG. 2 is a block diagram illustrating an integrated intelligence system according to an embodiment.
FIG. 3 is a view illustrating a form in which relationship information between a concept and an action is stored in a database, according to an embodiment.
FIG. 4 is a block diagram of a generative artificial intelligence system according to an embodiment.
FIG. 5A and FIG. 5B illustrate a method of configuring a multi-window layout on an electronic device according to an embodiment.
FIG. 6 illustrates an electronic device and an AI model according to an embodiment.
FIG. 7 is a block diagram of an electronic device according to an embodiment.
FIG. 8 is a block diagram of components performing operations related to multi-window layout setting, according to an embodiment.
FIG. 9 is a flowchart of a multi-window layout configuration method according to an embodiment.
FIG. 10 is a flowchart of a multi-window layout configuration method according to an embodiment.
FIG. 11 illustrates an example of configuring a multi-window layout according to an embodiment.
FIG. 12 illustrates an example of configuring a multi-window layout according to an embodiment.
FIG. 13 illustrates an example of configuring a multi-window layout according to an embodiment.
FIG. 14 illustrates an example of configuring a multi-window layout according to an embodiment.

### [Mode for the Invention]

Hereinafter, various embodiments of the present disclosure will be described in detail with reference to the accompanying drawings so that those with ordinary skill in the art to which the present disclosure pertains may easily carry out the embodiments. In connection with the description of the drawings, the similar or same reference numerals may be used for the similar or same constituent elements. In addition, in the drawings and related descriptions, the description of well-known features and configurations may be omitted for clarity and conciseness.

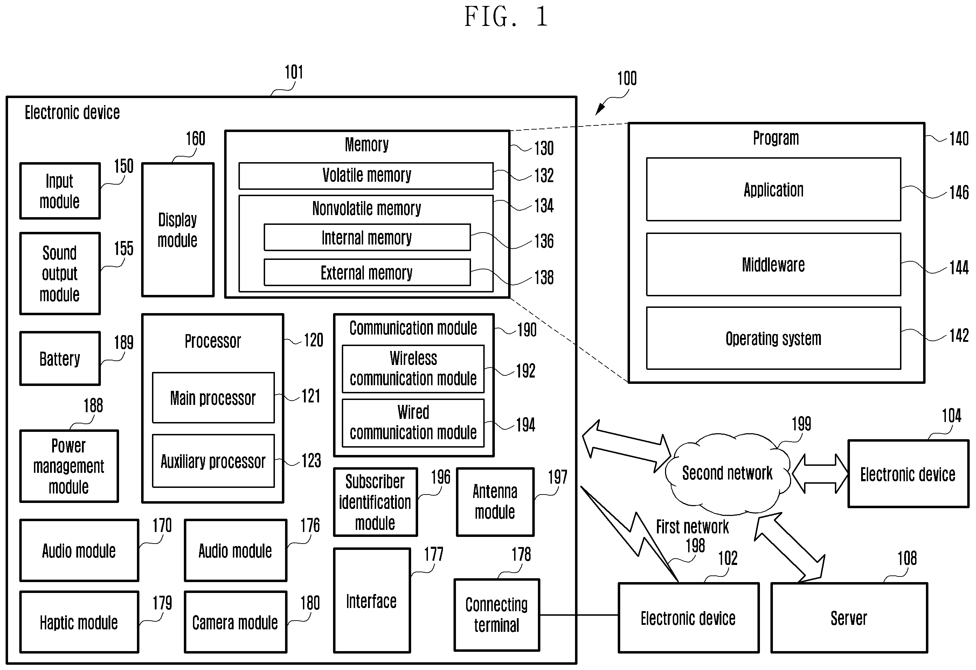

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102) (e.g., a speaker or a headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

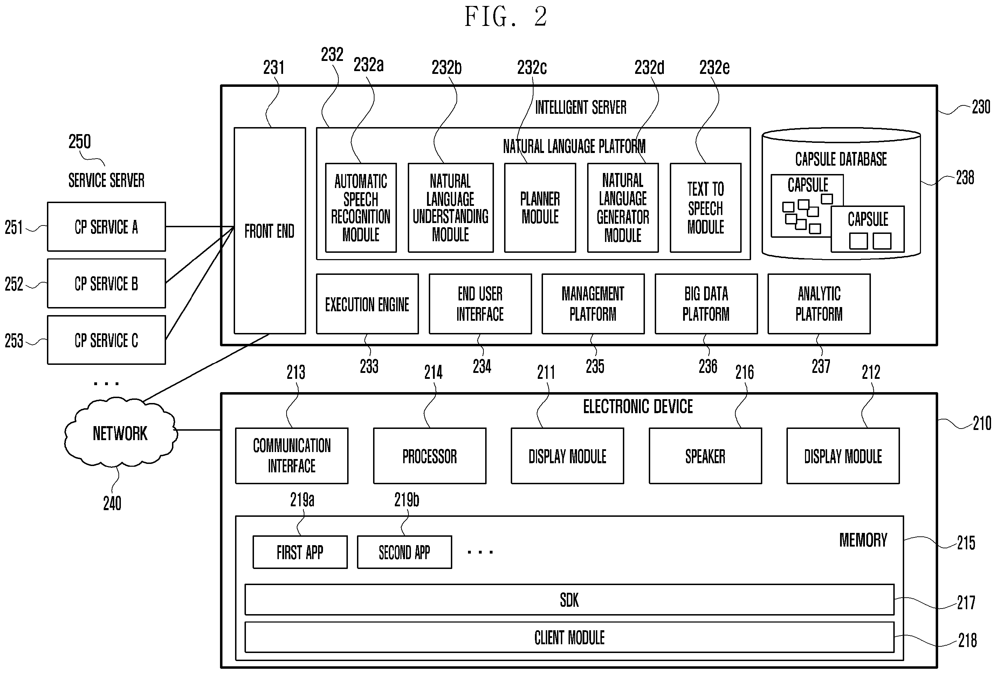

FIG. 2 is a block diagram illustrating an integrated intelligence system according to various embodiments.

With reference to FIG. 2, according to an embodiment, an integrated intelligence system may include an electronic device 210 (e.g., the electronic device 101 of FIG. 1), an intelligent server 230 (e.g., the server 108 of FIG. 1), and a service server 250 (e.g., the server 108 of FIG. 1).

According to an embodiment, the electronic device 210 may be a terminal device (or, an electronic device) connectable to the Internet, and, for example, may be a mobile phone, a smart phone, a personal digital assistant (PDA), a laptop computer, a TV, white goods, a wearable device, an HMD, or a smart speaker.

According to an embodiment, the electronic device 210 may include a communication interface 213 (e.g., the interface 177 of FIG. 1), a microphone 212 (e.g., the input module 150 of FIG. 1), a speaker 216 (e.g., the sound output module 155 of FIG. 1), a display module 211 (e.g., the display module 160 of FIG. 1), a memory 215 (e.g., the memory 130 of FIG. 1), or a processor 214 (e.g., the processor 120 of FIG. 1). The components listed above may be operatively or electrically connected to each other. The electronic device 210 may include at least a portion of a configuration and/or a function of the electronic device 101 of FIG. 1.

According to an embodiment, the communication interface 213 may be configured to be connected to an external device to transmit and receive data. According to an embodiment, the microphone 212 may receive a sound (e.g., a user utterance) and convert the sound into an electrical signal. According to an embodiment, the speaker 216 may output an electrical signal as a sound (e.g., a voice).

According to an embodiment, the display module 211 may be configured to display an image or a video. According to an embodiment, the display module 211 may also display a graphic user interface (GUI) of an app (or, an application program) being executed. The display module 211 of an embodiment may receive a touch input through a touch sensor. For example, the display module 211 may receive a text input through a touch sensor of a visual keyboard area displayed within the display module 211.

According to an embodiment, the memory 215 may store a client module 218, a software development kit (SDK) 217, and/or a plurality of apps 219a and 219b. The client module 218 and the SDK 217 may form a framework (or, a solution program) for performing a general-purpose function. In addition, the client module 218 or the SDK 217 may form a framework for processing a user input (e.g., a voice input, a text input, or a touch input).

According to an embodiment, the plurality of apps 219a and 219b stored in the memory 215 may be programs for performing designated functions. According to an embodiment, the plurality of apps may include a first app 219a or a second app 219b. According to an embodiment, the plurality of apps 219a and 219b may include a plurality of operations for performing designated functions. For example, the apps 219a and 219b may include an alarm app, a message app, and/or a schedule app. According to an embodiment, the plurality of apps 219a and 219b may be executed by the processor 214 to execute at least a portion of the plurality of operations.

According to an embodiment, the processor 214 may control overall operations of the electronic device 210. For example, the processor 214 may be electrically connected to the communication interface 213, the microphone 212, the speaker 216, and the display module 211 to perform designated operations.

According to an embodiment, the processor 214 may also execute a program stored in the memory 215 to perform a designated function. For example, the processor 214 may execute at least one of the client module 218 or the SDK 217 to perform the following operations for processing a user input. The processor 214 may control operations of the plurality of apps 219a, 219b through, for example, the SDK 217. The following operations described as operations of the client module 218 or the SDK 217 may be operations by execution of the processor 214.

According to an embodiment, the client module 218 may receive a user input. For example, the client module 218 may receive a voice signal corresponding to a user utterance detected through the microphone 212. Alternatively, the client module 218 may receive a touch input detected through the display module 211. Alternatively, the client module 218 may receive a text input detected through a keyboard or a visual keyboard. In addition to this, various forms of user inputs detected through an input module included in the electronic device 210 or an input module connected to the electronic device 210 may be received. The client module 218 may transmit the received user input to the intelligent server 230. The client module 218 may transmit state information of the electronic device 210 to the intelligent server 230 together with the received user input. The state information may be, for example, execution state information of an app.

According to an embodiment, the client module 218 may receive a result corresponding to the received user input. For example, in a case where the intelligent server 230 can calculate a result corresponding to the received user input, the client module 218 may receive the result corresponding to the received user input. The client module 218 may display the received result on the display module 211. In addition, the client module 218 may output the received result as audio through the speaker 216.

According to an embodiment, the client module 218 may receive a plan corresponding to the received user input. The client module 218 may display a result of executing a plurality of operations of an app on the display module 211 according to the plan. The client module 218 may, for example, display an execution result of the plurality of operations on the display module 211 and may output audio through the speaker 216. For another example, the electronic device 210 may display only a partial result (e.g., a result of a last operation) of executing the plurality of operations on the display module 211, and may output the partial result as audio through the speaker 216.

According to an embodiment, the client module 218 may receive a request for obtaining information necessary to calculate a result corresponding to a voice input from the intelligent server 230. According to an embodiment, the client module 218 may transmit the necessary information to the intelligent server 230 in response to the request.

According to an embodiment, the client module 218 may transmit result information of executing a plurality of operations to the intelligent server 230 according to the plan. The intelligent server 230 may identify that the received user input is correctly processed by using the result information.

According to an embodiment, the client module 218 may include a voice recognition module. According to an embodiment, the client module 218 may recognize a voice input performing a limited function through the voice recognition module. For example, the client module 218 may execute an intelligent app for processing a voice input to perform an organic operation through a designated input (e.g., wake up!).

According to an embodiment, the intelligent server 230 may receive information related to a user voice input from the electronic device 210 through a communication network. According to an embodiment, the intelligent server 230 may change data related to the received voice input into text data. According to an embodiment, the intelligent server 230 may generate a plan for performing a task corresponding to the user voice input based on the text data.

According to an embodiment, the plan may be generated by an artificial intelligence (AI) system. The artificial intelligence system may be a rule-based system, or may be a neural network-based system (e.g., a feedforward neural network (FNN), or a recurrent neural network (RNN)). Alternatively, it may be a combination of the aforementioned or another artificial intelligence system. According to an embodiment, the plan may be selected from a set of defined plans, or may be generated in real time in response to a user request. For example, the artificial intelligence system may select at least one plan among a plurality of defined plans.

According to an embodiment, the intelligent server 230 may transmit a result according to the generated plan to the electronic device 210, or may transmit the generated plan to the electronic device 210. According to an embodiment, the electronic device 210 may display a result according to the plan on the display module 211. According to an embodiment, the electronic device 210 may display a result of executing an operation according to the plan on the display module 211.

According to an embodiment, the intelligent server 230 may include a front end 231, a natural language platform 232, a capsule database (capsule DB) 238, an execution engine 233, an end user interface 234, a management platform 235, a big data platform 236, or an analytic platform 237.

According to an embodiment, the front end 231 may receive a user input received from the electronic device 210. The front end 231 may transmit a response corresponding to the user input.

According to an embodiment, the natural language platform 232 may include an automatic speech recognition module (ASR module) 232a, a natural language understanding module (NLU module) 232b, a planner module 232c, a natural language generator module (NLG module) 232d, or a text to speech module (TTS module) 232e.

According to an embodiment, the automatic speech recognition module 232a may convert a voice input received from the electronic device 210 into text data. According to an embodiment, the natural language understanding module 232b may grasp a user's intention by using text data of a voice input. For example, the natural language understanding module 232b may perform a syntactic analysis or a semantic analysis on a user input in a form of text data to grasp the user's intention. According to an embodiment, the natural language understanding module 232b may grasp a meaning of a word extracted from a voice input by using a linguistic feature (e.g., a grammatical element) of a morpheme or a phrase, and may determine the user's intention by matching the grasped meaning of the word to an intention. The natural language understanding module 223b may obtain intent information corresponding to a user utterance. The intent information may be information representing a user's intention determined by interpreting text data. The intent information may include information representing an operation or a function that the user desires to execute by using a device.

According to an embodiment, the planner module 232c may generate a plan by using the intention and a parameter determined in the natural language understanding module 232b. According to an embodiment, the planner module 232c may determine a plurality of domains necessary to perform a task based on the determined intention. The planner module 232c may determine a plurality of operations included in each of the plurality of domains determined based on the intention. According to an embodiment, the planner module 232c may determine a parameter necessary to execute the determined plurality of operations, or a result value output by execution of the plurality of operations. The parameter and the result value may be defined as a concept of a designated format (or, a class). Accordingly, the plan may include a plurality of operations determined by the user's intention, and a plurality of concepts. The planner module 232c may determine a relationship between the plurality of operations and the plurality of concepts in a step-by-step (or, hierarchical) manner. For example, the planner module 232c may determine an execution order of the plurality of operations determined based on the user's intention based on the plurality of concepts. In other words, the planner module 232c may determine an execution order of the plurality of operations based on a parameter necessary for execution of the plurality of operations, and a result output by the execution of the plurality of operations. Accordingly, the planner module 232c may generate a plan including association information (e.g., an ontology) between the plurality of operations and the plurality of concepts. The planner module 232c may generate a plan by using information stored in a capsule database in which a set of relationships between concepts and actions (or operations) is stored.

According to an embodiment, the natural language generator module 232d may change designated information into a text form. The information changed into the text form may be in a form of a natural language utterance. According to an embodiment, the text to speech module 232e may change information in a text form into information in a voice form.

According to an embodiment, a partial function or an entire function of a function of the natural language platform 232 may also be implementable in the electronic device 210.

The capsule database may store information on a relationship between a plurality of concepts and operations corresponding to a plurality of domains. A capsule according to an embodiment may include a plurality of operation objects (or action objects, or operation (or action) information) and concept objects (or concept information) included in a plan. According to an embodiment, the capsule database may store a plurality of capsules in a form of a concept action network (CAN). According to an embodiment, a plurality of capsules may be stored in a function registry included in a capsule database.

The capsule database may include a strategy registry in which strategy information necessary when determining a plan corresponding to a user input is stored. The strategy information may include reference information for determining one plan in a case where there are a plurality of plans corresponding to the user input. According to an embodiment, the capsule database may include a follow up registry in which information of a subsequent operation for suggesting the subsequent operation to a user in a designated situation is stored. The subsequent operation may include, for example, a subsequent utterance. According to an embodiment, the capsule database may include a layout registry storing layout information of information output through the electronic device 210. According to an embodiment, the capsule database may include a vocabulary registry in which vocabulary information included in capsule information is stored. According to an embodiment, the capsule database may include a dialog registry in which dialog (or, interaction) information with the user is stored. The capsule database may update a stored object through a developer tool. The developer tool may include, for example, a function editor for updating an operation (or action) object or a concept object. The developer tool may include a vocabulary editor for updating a vocabulary. The developer tool may include a strategy editor for generating and registering a strategy for determining a plan. The developer tool may include a dialog editor for generating a dialog with the user. The developer tool may include a follow up editor capable of activating a subsequent goal and editing a subsequent utterance providing a hint. The subsequent goal may be determined based on a currently set goal, a user's preference, or an environmental condition. In an embodiment, the capsule database may also be implementable within the electronic device 210.

According to an embodiment, the execution engine 233 may calculate a result by using the generated plan. The end user interface 234 may transmit the calculated result to the electronic device 210. Accordingly, the electronic device 210 may receive the result and provide the received result to the user. According to an embodiment, the management platform 235 may manage information used in the intelligent server 230. According to an embodiment, the big data platform 236 may collect data of the user. According to an embodiment, the analytic platform 237 may manage a quality of service (QoS) of the intelligent server 230. For example, the analytic platform 237 may manage components and a processing speed (or, efficiency) of the intelligent server 230.

According to an embodiment, the service server 250 may provide a service (e.g., food ordering or hotel reservation) designated to the electronic device 210. According to an embodiment, the service server 250 may be a server operated by a third party. According to an embodiment, the service server 250 may provide information for generating a plan corresponding to a received voice input to the intelligent server 230. The provided information may be stored in the capsule database. In addition, the service server 250 may provide result information according to the plan to the intelligent server 230. The service server 250 may include a plurality of service providers (e.g., CP service A 251, CP service B 252, or CP service C 253), and each service provider 251, 252, or 253 may provide a function for a domain related to each capsule stored in the capsule database 238 of the intelligent server 230.

In the integrated intelligence system described above, the electronic device 210 may provide various intelligent services to the user in response to a user input. The user input may include, for example, an input through a physical button, a touch input, or a voice input.

According to an embodiment, the electronic device 210 may provide a voice recognition service through an intelligent app (or, a voice recognition app) stored therein. In this case, for example, the electronic device 210 may recognize a user utterance or a voice input received through the microphone 212, and may provide a service corresponding to the recognized voice input to the user.

According to an embodiment, the electronic device 210 may perform a designated operation alone or together with the intelligent server 230 and/or the service server 250 based on the received voice input. For example, the electronic device 210 may execute an app corresponding to the received voice input, and perform the designated operation through the executed app.

According to an embodiment, in a case where the electronic device 210 provides a service together with the intelligent server 230 and/or the service server 250, the electronic device 210 may detect a user utterance by using the microphone 212, and generate a signal (or, voice data) corresponding to the detected user utterance. The electronic device 210 may transmit the voice data to the intelligent server 230 through a network 240 by using the communication interface 213.

The intelligent server 230 according to an embodiment may, as a response to the voice input received from the electronic device 210, generate a plan for performing a task corresponding to the voice input, or a result of performing an operation according to the plan. The plan may include, for example, a plurality of operations for performing a task corresponding to the user's voice input, and a plurality of concepts related to the plurality of operations. The concept may be one defining a parameter input to execution of the plurality of operations, or a result value output by the execution of the plurality of operations. The plan may include association information between the plurality of operations and the plurality of concepts.

According to an embodiment, the electronic device 210 may receive the response by using the communication interface 213. The electronic device 210 may output a voice signal generated within the electronic device 210 to an outside by using the speaker 216, or may output an image generated within the electronic device 210 to the outside by using the display module 211.

In FIG. 2, an example has been described in which operations of voice recognition, natural language understanding and generation, and calculation of a result using a plan of a user input received by the electronic device 210 are performed on the intelligent server 230, but various embodiments of the present document are not limited thereto. For example, at least a partial configuration (e.g., the natural language platform 232, the execution engine 233, the capsule database 238) of the intelligent server 230 may be embedded in the electronic device 210 (or the electronic device 101 of FIG. 1), and the operation thereof may be performed by the electronic device 210.

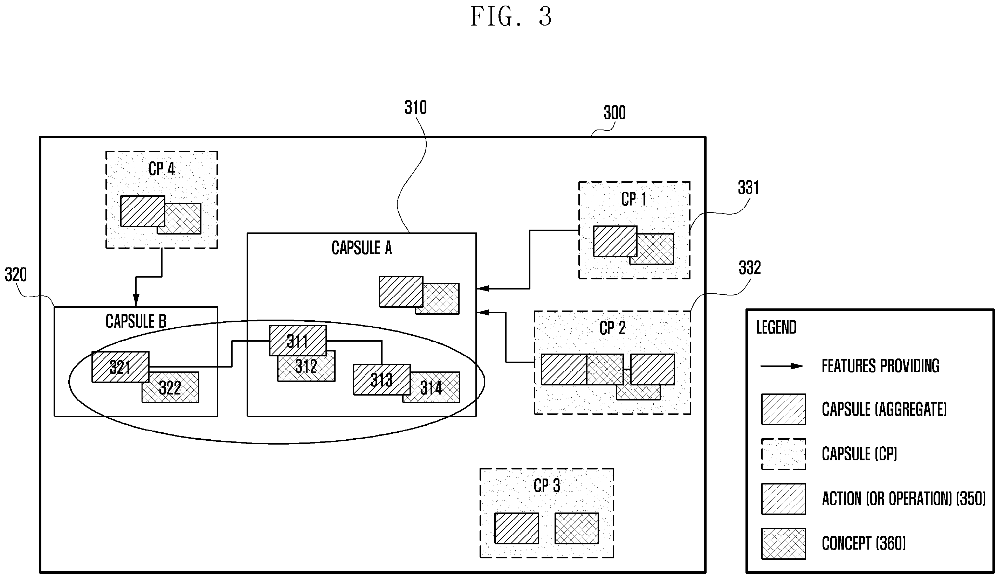

FIG. 3 is a view illustrating a form in which relationship information between a concept and an action (or operation) is stored in a database, according to various embodiments.

According to an embodiment, a capsule database (e.g., the capsule database 238 of FIG. 2) of an intelligent server (e.g., the intelligent server 230 of FIG. 2) may store a capsule in a form of a concept action network (CAN) 300. In the capsule database, an operation for processing a task corresponding to a user's voice input, and a parameter necessary for the operation may be stored in a form of a concept action network (CAN).

According to an embodiment, the capsule database may store a plurality of capsules (capsule A 310, capsule B 320) corresponding to each of a plurality of domains (e.g., applications). According to an embodiment, one capsule (e.g., capsule A 310) may correspond to one domain (e.g., a location (geo), or an application). In addition, at least one service provider (e.g., CP 1 331 or CP 2 332) for performing a function for a domain related to the capsule may correspond to one capsule. According to an embodiment, one capsule may include at least one or more operations 350 and at least one or more concepts 360 for performing a designated function.

According to an embodiment, a natural language platform (e.g., the natural language platform 232 of FIG. 2) may generate a plan for performing a task corresponding to a received voice input by using a capsule stored in the capsule database. For example, a planner module (e.g., the planner module 232c of FIG. 2) of the natural language platform may generate a plan by using a capsule stored in the capsule database. For example, a plan may be generated by using operations 311 and 313 and concepts 312 and 314 of capsule A 310 and an operation 321 and a concept 322 of capsule B 320.

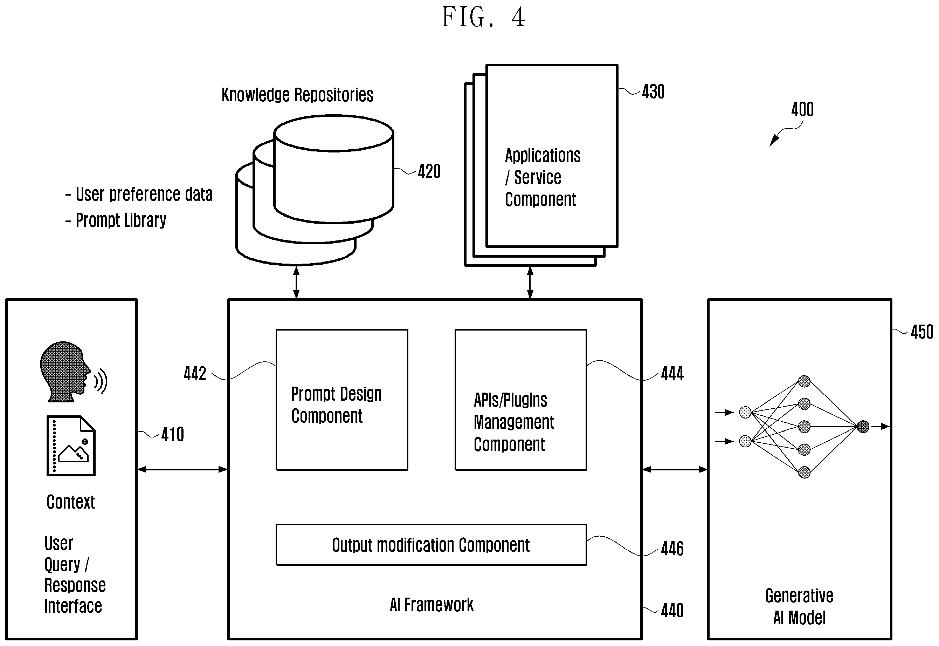

FIG. 4 is a block diagram of a generative artificial intelligence system according to an embodiment.

With reference to FIG. 4, a generative artificial intelligence system 400 may include a generative AI model 450, an AI framework 440, a user query/response interface 410, an applications/service component 430, or a knowledge repository 420. The AI framework 440 may include a prompt design component 442, an API/plugin management component 444, and/or an output modification component 446.

According to an embodiment, the user query/response interface 410 may receive an input of a user. The input of the user may be in a form such as a natural language, an image, and/or a video. In addition, upon transmission of the input of the user, context information may also be transmitted together. The context information may include various additional information at a point of time of the user input. For example, the context information may include information related to the user or the electronic device such as application information currently being used by the user or position information of the user. In addition, the user input may also be in a form in which the aforementioned natural language, image, sound, or context information is mixed. In addition, the user input may also be in a non-natural language form such as selecting a menu.

According to an embodiment, the user query/response interface 410 may output a result of the generative artificial intelligence system 400 to the user. The output may be in a natural language form or a specific content form, and may also be provided in a form of an action requested by the user, or other forms.

According to an embodiment, the AI framework 440 may receive the input of the user, and may coordinate and control each component necessary to perform an intention of the user based on a query of the user.

According to an embodiment, the user input received in the user query/response interface 410 may be transmitted to the prompt design component 442. The prompt design component 442 may be used to generate a prompt suitable for inputting the user input to a large language model (LLM) or a large multimodal model (LMM). The prompt design component 442 may be an AI component using a machine learning algorithm or a neural network to develop a better prompt over time. The prompt design component 442 may access the knowledge repository 420 including user preference data, a prompt library, and a prompt example based on the user input to obtain and generate a prompt, and deliver the generated prompt to the LLM or the LMM.

According to an embodiment, the API/plugin management component 444 may serve to communicate with external information in a case where there is a request for additional information when delivering the user input as an input of a generative model. The API/plugin management component 444 establishes a channel capable of communicating with an outside of an AI interface through an API, and may allow access to various data sources through the established channel. In addition, the API/plugin management component 444 may request a corresponding action through the API in a case where an application or a service should perform the action that finally performs the input of the user, rather than an intermediate result. Information secured from the outside may be used to generate a prompt in the prompt design component 442 together with the user input, or may be delivered as an input of the generative model.

According to an embodiment, the output modification component 446 (or refiner component) may finely tune a result output from the generative model. For example, the output modification component 446 may verify whether content generated through the LLM and/or the LMM is not irrelevant, does not include biased content, or does not include harmful content. In addition, the output modification component 446 may determine to what extent it matches a result desired by the user, and if an additional process is necessary, may proceed with the corresponding process. The output modification component 446 may additionally configure a hint for avoiding an unwanted output and provide the hint to the user.

According to an embodiment, the generative AI model 450 may generally refer to an artificial intelligence neural network creating a new form of data depending on user input information. The generative AI model 450 may include a model generating an image and/or a model generating a language. As models generating an image, there are typically a generative adversarial network (GAN) and a variational auto encoder (VAE), and a diffusion-based generative model using a VAE and a Transformer structure may be taken as an example. As a model generating a language, a model trained to output a statistically most appropriate output value based on an input value, typically a model such as CHAT-GPT 3 or CHAT-GPT 4, may be taken as an example. In addition, there are also large multimodal models (LMMs) capable of recognizing data inputs of various forms such as text, image, and voice, and generating new data corresponding thereto.

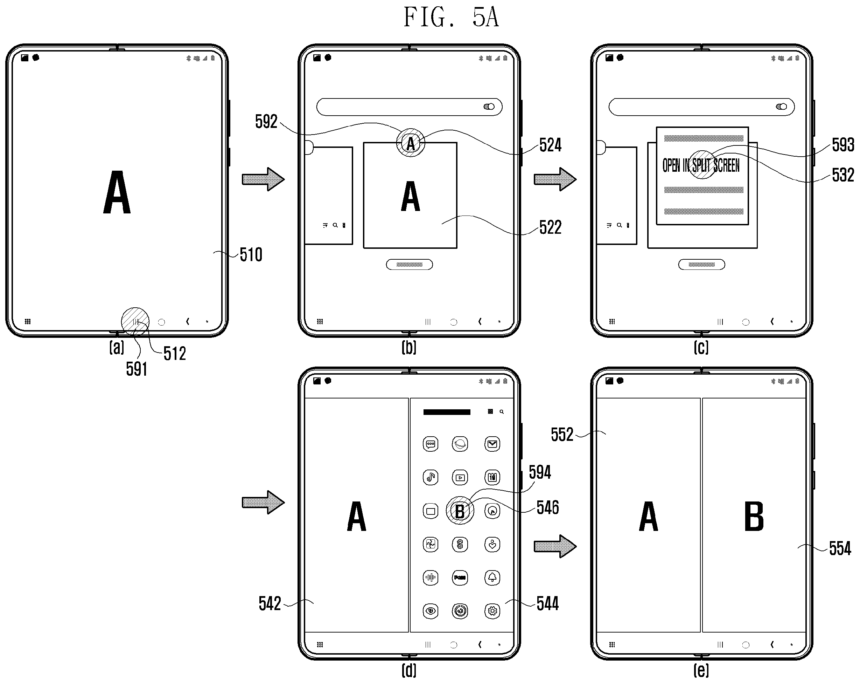

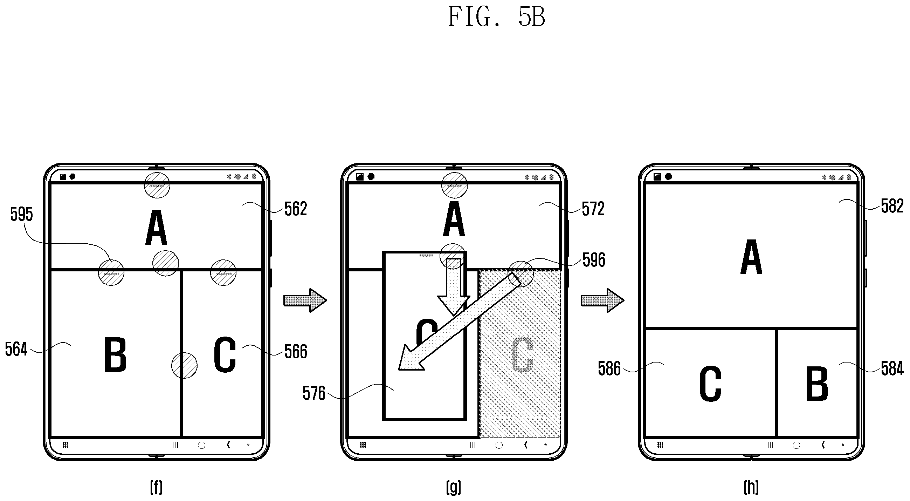

FIG. 5A and FIG. 5B illustrate a method of configuring a multi-window layout on an electronic device according to an embodiment.

According to an embodiment, the electronic device may simultaneously execute at least a portion of a plurality of applications. In this case, the electronic device may configure an execution screen of each application being executed as a multi-window layout and display the multi-window layout on a display.

FIG. 5A illustrates a process of providing execution screens of application A and B as a multi-window layout.

With reference to (a) of FIG. 5A, the electronic device executes application A, and may configure the execution screen 510 thereof as one window and display the window on an entire area of the display. In this case, a recent APP button 512, a home button, a back button, and/or an entire menu button may be provided at a lower end of the execution screen of application A.

In a case where the user selects 591 the recent APP button 512 displayed at the lower end of the display by a touch input, a list of recently executed applications may be provided as in (b) of FIG. 5A. For example, in the list of recently executed applications, reduced execution screens 522 of applications may be arranged in an order in which they were recently executed, and may be scrollable left and right. Among these, the user may select 592 an icon 524 of application A.

In a case where the user selects 592 the icon 524 of application A from the list of (b) of FIG. 5A, executable menus may appear as in (c) of FIG. 5A. For example, the menus may include menus such as application information, view as pop-up screen, keep open in recent apps, and/or open in split screen 532.

In a case where the user selects 593 the open in split screen menu 532 among the menus of (c) of FIG. 5A, the electronic device may display a first window 542 including the execution screen of application A, and a second window 544 for selecting an application to be executed in multi-window (or split screen) with application A, as in (d) of FIG. 5A. In this case, the second window 544 may include executable application icons installed on the electronic device.

In a case where the user selects 594 an icon 546 of application B in the second window 544, as in (e) of FIG. 5A, the electronic device executes application B, and may configure a first window 552 including the execution screen of application A and a second window 554 including the execution screen of application B as a multi-window layout and display the multi-window layout on the display.

The process of FIG. 5A is merely an embodiment for executing the execution screen 552 of application A and the execution screen 554 of application B in multi-windows, and is not limited thereto, and the electronic device may implement a user interface for multi-window execution in another manner.

FIG. 5B illustrates a process of changing a size and a position of each window in a multi-window layout.

With reference to (f) of FIG. 5B, an electronic device may configure an execution screen 562 of application A, an execution screen 564 of application B, and/or an execution screen 566 of application C as multi-windows and display them on an upper end, a lower left, and a lower right of a display, respectively. In this case, in a case where a touch and drag input for a portion of an edge area of each window occurs, the electronic device may adjust a boundary position of each window to change a size of each window.

In a case where a drag operation occurs after a long touch for a specific area (e.g., an edge area) of a specific window, the electronic device may move a position of an execution screen of a selected application. With reference to (g) of FIG. 5B, a user may move a position of a corresponding window by dragging after a long touch on an upper edge 595 of application C.

In a case where the user releases a touch after dragging the execution screen 576 of application C over the execution screen 564 of application B, as in (h) of FIG. 5C, the execution screen 586 of application C may be displayed at the moved lower left, and the execution screen 584 of application B may be moved to the lower right and displayed. In this case, a size of each window may be changed according to an attribute of each application, a user's boundary area adjustment, or the like.

The process of FIG. 5A is merely an embodiment for changing a multi-window layout, and is not limited thereto, and the electronic device may implement a user interface capable of changing the multi-window layout in another manner.

As described through FIG. 5A and FIG. 5B, for setting or changing of the multi-window layout, a plurality of manipulations of the user may be required. In addition, a case may occur in which a position and/or a size of an execution screen of each application does not meet an actual user's intention. In addition, in a case where a notification (e.g., reception of a message) occurs in a state in which multi-windows are executed, the multi-windows may be terminated or an unwanted change of the layout may occur in a process of executing a corresponding application and identifying the notification to identify the notification.

According to an embodiment, the electronic device may be implemented as an extended reality (XR) device. In a case of the XR device, passive manipulation processes for setting and changing of a multi-window layout may give difficulty and fatigue to the user. For example, in a virtual reality (VR)/augmented reality (AR)/mixed reality (MR) situation in which a virtual object should be displayed in various directions and distances, there may be difficulty for the user to directly set the layout.

Hereinafter, various embodiments will be described in which an electronic device may automatically set or change a multi-window layout without a separate manipulation of a user in response to occurrence of an event, by execution of a task request for an AI model and/or a determined algorithm.

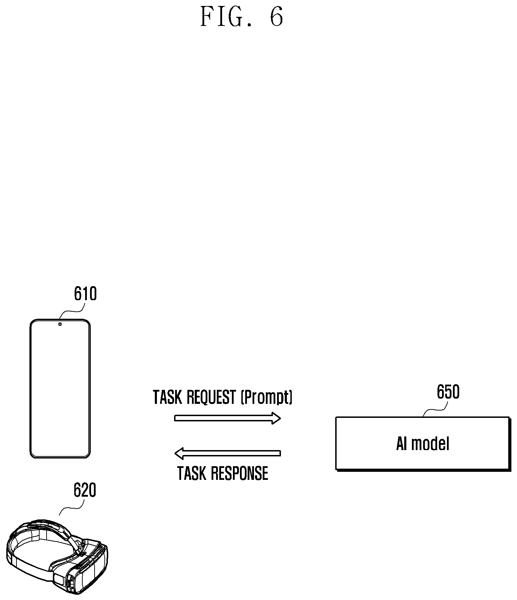

FIG. 6 illustrates an electronic device and an AI model according to an embodiment.

With reference to FIG. 6, the electronic device may be implemented as a portable electronic device 610 such as a smart phone or a tablet PC, or may be implemented as an extended reality (XR) device 620.

According to an embodiment, in a case where the electronic device is implemented as the portable electronic device 610, the electronic device 610 may execute an application and display an execution screen of the application on a display. In a case where a plurality of applications are being executed, the electronic device 610 may configure a multi-window layout providing an execution screen of each application through divided areas on the display and display it through the display. A form of the multi-window layout and a method of configuring and changing the multi-window layout according to a user input have been described above through FIG. 5A and FIG. 5B.

According to an embodiment, in a case where the electronic device is implemented as the XR device 620, the electronic device 620 may output an execution screen of an application to be recognized by the user through an XR image (e.g., an AR image, a VR image, or an MR image). In a case where a plurality of applications are being executed, the electronic device 620 may provide an XR image configured as a multi-window layout to the user. The user may recognize an execution screen of each application on areas divided from each other through the XR image and control each application through a gesture input.

According to an embodiment, an AI model (artificial intelligence model) 650 may be implemented as a generative AI model (generative artificial intelligence model), which is an artificial intelligence model generating new information and sentences by learning various data, and in the present document, the generative AI model may also be referred to as an AI model or a large language model (LLM). According to an embodiment, the AI model 650 may include an on-device AI model implemented on an electronic device (e.g., the electronic device 101 of FIG. 1, the electronic device 210 of FIG. 2) and a server AI model implemented by an external server (e.g., the intelligent server 230 of FIG. 2), and the server AI model may be implemented and operated in a server of a manufacturer of the electronic devices 610 and 620, or may be implemented and operated by a 3rd party.

According to an embodiment, the electronic devices 610 and 620 may deliver (or transfer) a task request for causing the AI model 650 to perform an intended task to the AI model 650 based on a user input. For example, in a case where a user of the electronic devices 610 and 620 inputs a task to be requested to the AI model 650 through a voice input that is input through a microphone or a text input that is input through a keyboard/keypad, the electronic devices 610 and 620 may generate a prompt including the task request and deliver it to the AI model 650. The prompt is a command for generating a task response in the AI model 650, and may serve to induce the AI model 650 to perform a work desired by the user. The AI model 650 may interpret the prompt received from the electronic devices 610 and 620 to execute the task requested by the user, and generate a result of the executed task as text and/or image information to deliver it to the electronic devices 610 and 620 as a task response.

According to an embodiment, the AI model 650 may be trained for various types of tasks. There is no determination as to which learning data the AI model 650 is trained based on and which task it can perform.

According to various embodiments of the present document, the AI model 650 may be trained based on current state information (e.g., application information, device state information, user state/tendency information, stored data, usage pattern and/or preference information) of the electronic devices 610 and 620 and a form of a multi-window layout. For example, the AI model 650 may be trained based on current state information set by a user in various electronic devices 610 and 620, and/or defined by a developer of the electronic devices 610 and 620 or an application, and information of a currently set multi-window layout.

According to an embodiment, in a case where a plurality of applications are executed, the electronic devices 610 and 620 may detect an event triggering a configuration of a multi-window layout. For example, in a case where a second application is executed in a state in which a first application is executed and an execution screen of the first application is displayed, the electronic devices 610 and 620 may detect it as an event triggering a configuration of a multi-window layout. In response to detection of the event, the electronic devices 610 and 620 may generate a prompt including information related to the detected event and a task request for requesting the configuration of the multi-window layout and deliver it to the AI model 650. The AI model 650 may interpret details of the received prompt, and may generate a task response including information related to a multi-layout based on information included in the prompt and deliver it to the electronic devices 610 and 620. The electronic devices 610 and 620 may configure a multi-window layout based on the task response delivered from the AI model 650. Accordingly, the electronic devices 610 and 620 may configure a multi-window layout to meet a user's intention without going through a plurality of user inputs as described through FIG. 5A and FIG. 5B.

In the present document, it will be described that the electronic devices 610 and 620 obtain information related to multi-window layout configuration from the AI model 650, but various embodiments of the present document are not limited thereto. For example, the electronic devices 610 and 620 may configure a multi-window layout according to a determined algorithm based on information related to an event triggering generation of the multi-window layout and current state information of the electronic devices 610 and 620. In this case, the algorithm for the layout reconfiguration may be implemented as a computer program including various instructions, stored on a memory of the electronic devices 610 and 620, and executed by a processor of the electronic devices 610 and 620.

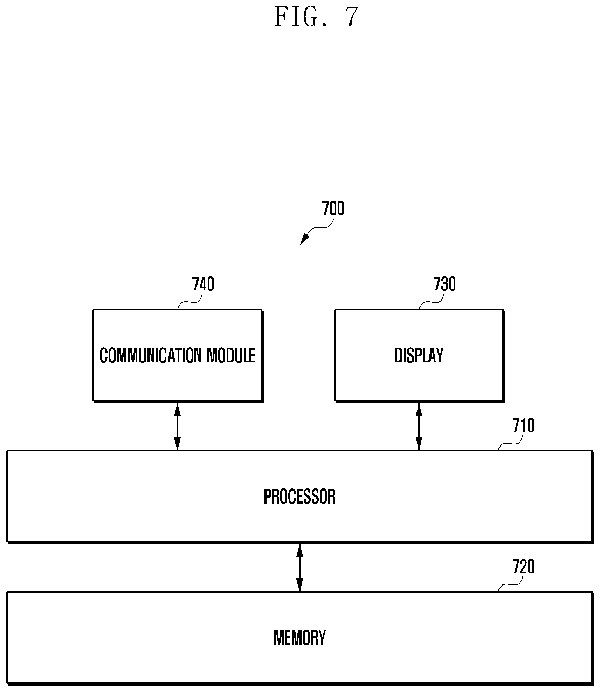

FIG. 7 is a block diagram of an electronic device according to an embodiment.

With reference to FIG. 7, an electronic device 700 may include a communication module 740, a display 730, a processor 710, and a memory 720. In various embodiments of the present document, a portion of the illustrated configuration may be omitted or substituted with another configuration. The electronic device 700 may include at least a portion of a configuration and/or a function of the electronic device 101 of FIG. 1 and/or the electronic device 210 of FIG. 2. At least a portion of each component of the illustrated (or not illustrated) electronic device 700 may be operatively, functionally, and/or electrically connected. The electronic device 700 may be implemented as a portable electronic device (e.g., a smart phone, a tablet PC) or an XR device (e.g., a head mounted device, or AR glasses).

According to an embodiment, the display 730 may display various images provided from the processor 710. For example, the display 730 may be implemented as any one of a liquid crystal display (LCD), a light-emitting diode (LED) display, an organic light-emitting diode (OLED) display, a micro electro mechanical systems (MEMS) display, or an electronic paper display, and is not limited thereto. The display 730 may be configured as a touch screen detecting a touch and/or a proximity touch (or hovering) input using a user's body part (e.g., a finger) or an input device (e.g., a stylus pen). The display 730 may be implemented as a flexible display including a material of which at least a portion is flexible, and the electronic device 700 may be formed in various form factors such as a foldable device or a slidable device in which a display area can be varied by using a characteristic of the flexible display 730. The display 730 may include at least a portion of a configuration and/or a function of the display module 160 of FIG. 1. Hereinafter, an expression of displaying certain image information (e.g., at least one application execution screen) on the display 730 may be interpreted as meaning displaying on at least a partial area (e.g., a partial area or an entire area) of the display 730.

According to an embodiment, the communication module 740 may support wireless communication with an external device using cellular wireless communication (e.g., 4G long term evolution (LTE), 5G new radio (NR)) and/or short-range wireless communication (e.g., Wi-Fi). For example, the electronic device 700 may communicate with an external server (e.g., the intelligent server 230 of FIG. 2) providing a voice assistant service through a network by using the communication module 740. The communication module 740 may include at least a portion of a configuration and/or a function of the communication module 190 of FIG. 1 and/or the communication interface 213 of FIG. 2.

According to an embodiment, the memory 720 may store various data temporarily or permanently, including a volatile memory and a non-volatile memory. The memory 720 includes at least a portion of a configuration and/or a function of the memory 130 of FIG. 1 and/or the memory 215 of FIG. 2, and may store the program 140 of FIG. 1. The memory 720 may store various applications (e.g., the first app 219a or the second app 219b of FIG. 2) and a program module (e.g., the client module 218 of FIG. 2) supporting intelligent services.

According to an embodiment, the memory 720 may store various instructions that can be performed in the processor 710. Such instructions may include control commands such as arithmetic and logic operations, data movement, and/or input/output that can be recognized by the processor 710.

According to an embodiment, the processor 710 is a configuration capable of performing an operation or data processing regarding control and/or communication of each component of the electronic device 700, and one or more processors may be included. The processor 710 may include at least a portion of a configuration and/or a function of the processor 120 of FIG. 1 and/or the processor 214 of FIG. 2.

According to an embodiment, there will be no limitation on operation and data processing functions that the processor 710 can implement on the electronic device 700, but in the present document, various embodiments for configuring a multi-window layout by using an AI model and/or using a determined algorithm according to an event will be described. Operations of the processor 710 to be described later may be performed by loading instructions stored in the memory 720.

In the present document, a description that the processor 710 can perform certain operation (or function, work, task) may be interpreted as substantially the same meaning as that an instruction (or command, computer program) causing the electronic device 700 (or the processor 710) to perform the corresponding operation is stored in the memory 720 (e.g., non-volatile memory, storage). In addition, a description that the processor 710 can perform certain operation may be interpreted as substantially the same meaning as that at least one processor without determination can perform the corresponding operation.

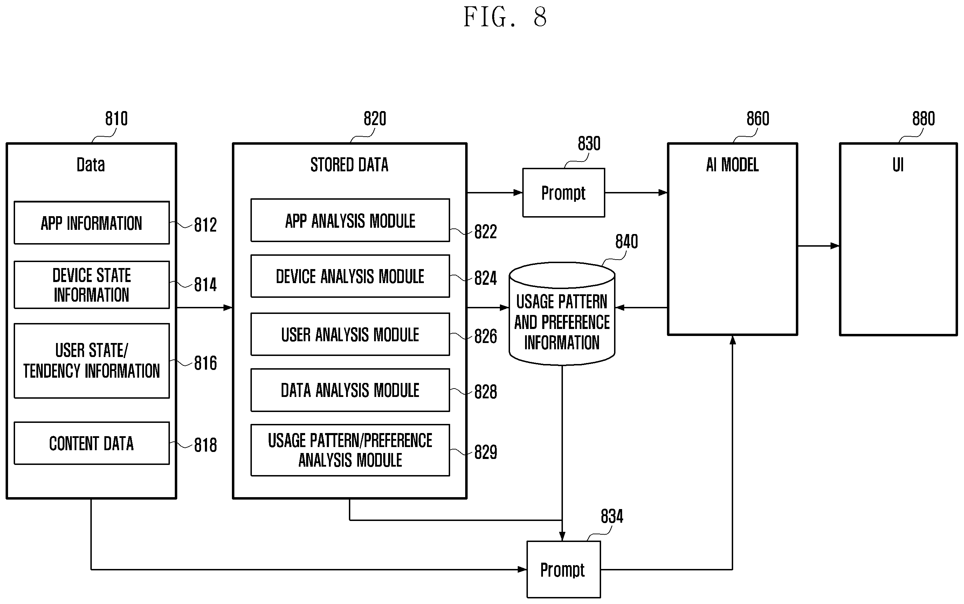

According to an embodiment, the memory 720 may store various data necessary for setting of a multi-window layout. For example, in the memory 720, application information including information related to various applications installed and/or being executed on the electronic device 700, device state information related to a state of the electronic device 700, user state/tendency information including information such as personal information or a behavior pattern of a user, and/or various content data may be stored. An example of data stored in the memory 720 will be described in more detail through FIG. 8.

According to an embodiment, the processor 710 may execute at least one application stored in the memory 720. For example, the processor 710 may execute a first application in a case of a user input for an application icon or satisfying a designated condition. The processor 710 may display an execution screen of the executed first application on the display 730. In a case where an application currently being executed in a foreground is one first application, the processor 710 may display the execution screen of the first application on a substantially entire area of the display 730 in a single window layout.

According to an embodiment, the processor 710 may detect an event triggering a configuration of a multi-window layout in a state in which the first application is executed. For example, the event triggering the configuration of the multi-window layout is an event triggering a second application, and may include an event such as occurrence of an input selecting an application to be executed in the multi-window layout described through FIG. 5A and FIG. 5B, satisfaction of a designated execution condition, reception of a message, or occurrence of a notification, and is not limited thereto.

According to an embodiment, the processor 710 may generate a prompt including a task request for requesting the configuration of the multi-window layout from an AI model (e.g., a generative AI model). For example, the AI model may be trained based on operation state information (e.g., application information, device state information, user state/tendency information, content data, usage pattern and/or preference information) of the electronic device 700 and a form of a multi-window layout. For example, the AI model may be trained based on current state information set by a user in various electronic devices 700, and/or defined by a developer of the electronic device 700 or an application, and information of a currently set multi-window layout. Accordingly, the AI model may configure a multi-window layout according to the task request included in the prompt of the electronic device 700 and deliver a task response including information related thereto to the electronic device 700.

According to an embodiment, the AI model may include an on-device AI model implemented on the electronic device 700 and a server AI model implemented by an external server (e.g., the intelligent server 230 of FIG. 2), and the server AI model may be implemented and operated in a server of a manufacturer of the electronic device 700, or may be implemented and operated by a 3rd party.

According to an embodiment, the processor 710 may generate a prompt including information related to a detected event, information related to a current operation state of the electronic device 700, and a task request for requesting the configuration of the multi-window layout.

According to an embodiment, the processor 710 may analyze at least a portion of information (e.g., application information, device state information, user state/tendency information, or content data) stored in the memory 720 to analyze a usage pattern of the user for a plurality of applications to be displayed in a multi-window layout. In a case where the configuration of the multi-window layout is triggered according to execution of a second application in a state in which the first application is being executed, based on application information such as types (e.g., media player, messenger, document, calendar, calculator, or game) of the first application and the second application, an execution history, dialog details, a registered schedule, and notification details, and device state information such as a detachment/attachment of a stylus pen, or a folding/unfolding state, the processor 710 may analyze the usage pattern and preference of the user for the first application and the second application. For example, the processor 710 analyzes a change in details of content provided by an application being executed, a user's input operation (e.g., an interaction target, click, long-click, swipe, or pinch & zoom), and a change in device state (e.g., connection/disconnection with an external device, change in network connection state, change in position information based on GPS, or reception of a message/call), and may analyze an input of the user using an input device (e.g., keypad, stylus pen, mouse, or finger touch).

An example of a prompt generated according to current operation state information of the electronic device 700 and/or an analysis result of the usage pattern of the user is as in the following Table 1.

**[Table 1]**

| |
|---|
| The first application is located at an upper left with a size of A*B, the second application is located at an upper right with a size of C*D, and the third application is located at a lower end with a size of E*F. The first application provides a soccer match broadcast screen, is currently playing an advertisement, and is a currently activated screen. The second application is an internet application screen searching for a soccer player mentioned in the first application 30 minutes ago, and there is currently no manipulation of the user. The third application is a gallery application, and a photo of a cat is being displayed for 7 minutes. A notification of a received message "Did you buy a birthday present for father?" occurs in a fourth application. Determine whether to execute in multi-windows or execute a portion as a pop-up window, whether to reduce to a widget form or terminate for the first application, the second application, the third application, and the fourth application, finally determine whether size adjustment and position change of each window are necessary, and request delivery of numerical data for a position, a size, and a window type of each application. |

According to an embodiment, the processor 710 may identify content being provided in an application being executed, and determine current operation state information of the electronic device 700 based on details of the content. For example, in a case where the application being executed is providing a soccer match broadcast screen, the processor 710 may analyze the details of the content such as a situation mentioned in the broadcast screen of the corresponding application, a score, a player name, or product information provided in an advertisement screen, and generate a prompt by including the analyzed details of the content in the current operation state information of the electronic device 700. According to an embodiment, the processor 710 may determine the current operation state information of the electronic device 700 by analyzing position information or surrounding information of the electronic device 700. For example, the processor 710 may monitor a current location of the electronic device 700 in real time by using GPS, cellular wireless communication (e.g., 4G LTE, or 5G NR), and/or short-range wireless communication (e.g., Wi-Fi, Bluetooth, or BLE (Bluetooth low energy)). For example, in a case where the electronic device 700 moves to be located near a coffee shop, it may be detected that the electronic device 700 is moving near the coffee shop through cell information of GPS or cellular wireless communication, and/or a broadcasting signal of a Wi-Fi AP and/or a BLE beacon signal placed in the coffee shop may be received and recognized. In a case where a usage pattern of a user of the electronic device 700 has a tendency to make an order through an ordering application near a coffee shop, the processor 710 may generate a prompt by including corresponding information in the current operation state information of the electronic device 700.

According to an embodiment, the processor 710 may recognize an adjacent external device through short-range wireless communication (e.g., Wi-Fi, or Bluetooth), and identify an adjacent place through external device recognition, and generate a prompt by including corresponding information in the current operation state information of the electronic device 700.

According to an embodiment, the processor 710 may determine a current operation state of the electronic device 700 based on an external device connected through a communication module 740 and information delivered from the external device. For example, in a case where the user is moving by a vehicle, the electronic device 700 may be connected to an in-vehicle device through short-range wireless communication (e.g., Bluetooth), and may receive, from the in-vehicle device, current driving information, traffic information, position information, surrounding information, and/or occupant information delivered from the in-vehicle device, and generate a prompt by including corresponding information in the current operation state information of the electronic device 700.

According to an embodiment, the processor 710 may deliver it to an AI model through the communication module 740. For example, in a case of delivering a task request for multi-window layout configuration to an on-device AI model, the processor 710 may deliver a prompt to an AI processor configured independently of the processor 710 or an AI module including a program that can be executed through the processor 710. Alternatively, the processor 710 may deliver the generated prompt to a server AI model through a network by using the communication module 740.

According to an embodiment, the AI model may configure a multi-window layout based on details of the prompt received from the electronic device 700. The AI model may be trained to understand details of text included in the received prompt. The AI model executes a task for the task request included in the prompt, and may generate information related to a multi-window layout as an execution result. For example, the information related to the multi-window layout may include information necessary to configure the multi-window layout in the electronic device 700 such as a position, a size, a form of a window, whether it is a pop-up window, and whether to switch to the background of a window including an execution screen of each application. The AI model may deliver the information related to the generated multi-window layout to the electronic device 700.

According to an embodiment, the processor 710 may configure a multi-window layout based on a task response received from the AI model and display it on a display 730. For example, the processor 710 may determine a position, a size, a form of a window, whether it is a pop-up window, and whether to switch to the background of windows including execution screens of applications being executed, based on multi-window layout related information included in the task response received from the AI model.

According to an embodiment, in a state in which execution screens of a plurality of applications are configured and displayed as a multi-window layout, in a case where an event related to a change of the multi-window layout occurs, the processor 710 may request reconfiguration of the multi-window layout from the AI model.

According to an embodiment, the processor 710 may detect an event triggering a change of a layout in a state in which the multi-window layout is displayed on the display 730. For example, as the event, a case where a new application is executed, a case where there is a change or an important event in details of content provided by an application, a case where a message/call notification occurs, a case where a change occurs in application information and/or device state information, a case where it is connected or disconnected to an external device, a case where a short-range wireless communication function is activated or deactivated, a case where insertion/detachment of a stylus pen occurs, or the like may be taken as an example, and is not limited thereto.

According to an embodiment, in response to detection of the event, the processor 710 may generate a prompt including information related to the detected event and a task request for requesting the reconfiguration of the multi-window layout. Here, a method of generating the prompt or information included in the prompt may be substantially the same as the prompt generated upon requesting the configuration of the multi-window layout previously. The processor 710 may include information related to a configuration of a current multi-window layout such as a type of an application currently being executed in multi-windows and details of content being provided, and a size and a position of each window in the prompt.

According to an embodiment, the generated prompt may be delivered to the AI model, a task response may be received from the AI model, and the multi-window layout may be reconfigured based on the received task response and displayed on the display 730. For example, the processor 710 determines a position, a size, or a form of a window including execution screens of applications being executed based on multi-window layout related information included in the task response received from the AI model, and may switch some applications to a pop-up window, or switch to a background.

In the embodiments described above, it will be described that the electronic device 700 obtains information related to multi-window layout configuration from the AI model, but various embodiments of the present document are not limited thereto. For example, the electronic device 700 may configure a multi-window layout according to a determined algorithm based on information related to an event triggering generation of the multi-window layout and current state information of the electronic device 700. In this case, the algorithm for the layout reconfiguration may be implemented as a computer program including various instructions, stored on the memory 720 of the electronic device 700, and executed by the processor 710 of the electronic device 700.

Instructions for performing the operation of the electronic device 700 (or the processor 710) described above may be stored in a computer-readable recording medium. The recording medium may be tangible and non-transitory. The recording medium may store one or more computer programs including the instructions.

FIG. 8 is a block diagram of components performing operations related to multi-window layout setting, according to an embodiment.

According to an embodiment, an electronic device (e.g., the electronic device 700 of FIG. 7) may store various data 810 necessary to configure a multi-window layout on a memory (e.g., the memory 720 of FIG. 7).

According to an embodiment, application information 812 may include information related to various applications installed and/or being executed on the electronic device. For example, the application information 812 includes application intrinsic information such as a type (e.g., media player, messenger, document, calendar, calculator, or game), a resolution, an execution history, a usage frequency, a user's preference, an association with another application, a simultaneous execution frequency, and a size, a ratio, and a resolution of an execution screen of each application, multi-window related information of the application such as whether multi-window is supported, a display position, a size, and a resolution upon multi-window execution, and another application with a high execution frequency together in multi-window, and/or at least a portion of content information of the application such as content (e.g., video, audio), a message, or a notification provided in the application being executed. The application information 812 described in the present document is not limited to the aforementioned example.

According to an embodiment, device state information 814 may include information related to a state of the electronic device. For example, the device state information 814 includes device basic information such as model information of the electronic device, each hardware (e.g., processor, memory, or communication module) information, display information (e.g., size, ratio, resolution, landscape/portrait mode), firmware information, and operating system information, and at least a portion of device current state information such as a current battery state, an activation/connection/quality state of wireless communication (e.g., cellular wireless communication, Bluetooth, Wi-Fi), an external device (e.g., Wi-Fi access point, another electronic device) connected through wireless communication, position information based on GPS and/or wireless communication, a moving path, a relative position between a user or another electronic device and the electronic device, detachment/attachment of a stylus pen, a folding/unfolding state and/or a folding angle in a case of a foldable device, a slider-in/slide-out state and/or a display extension distance in a case of a slidable device, and a VR/MR/AR operation mode, a field of view (FoV), or rotation/movement information in a case of an XR device. The device state information 814 described in the present document is not limited to the aforementioned example.

According to an embodiment, user state/tendency information 816 may include user personal information such as an age, a gender, or an occupation of the user of the electronic device, current behavior information of the user (e.g., start driving, driving, watching lecture, exercising, playing game, or sleeping), and user tendency information such as an execution history, a usage frequency, a preference, an application search record, an internet search record of an application, applications (or association of applications) with a high frequency of simultaneous execution, or a preferred form of a multi-window layout, and a behavior pattern upon occurrence of a notification (e.g., reception of a message). The user state/tendency information 816 described in the present document is not limited to the aforementioned example.

According to an embodiment, content data 818 may include at least a portion of media data (e.g., a captured image, a video, music, or a document), object or background information included in the media data, capture time information and/or download information, message information transmitted and received through a social network service (SNS), a message, or an email application, visited position information, a schedule, an anniversary, or payment details. The content data 818 described in the present document is not limited to the aforementioned example.

According to an embodiment, an analysis module 820 may analyze the current operation state of the electronic device based on the data 810 stored in the memory in a case where an event triggering a multi-window layout change occurs.

According to an embodiment, an application analysis module 822 may analyze information such as a type of at least one application currently being executed or displayed on the display, and a type and details of content being provided. For example, an application analysis module 822 may analyze a type (e.g., music, messenger, document, calendar, calculator, or game) of applications being executed, and monitor a screen change to determine in which state (e.g., playback of content, text output, or real-time dialog) content currently being displayed on a screen is. In addition, the application analysis module 822 may analyze an execution history, a usage frequency, a user's preference, or the like to determine whether content being provided through each window is important content to a user. Upon the analysis, the application analysis module 822 may be further based on at least a portion of device state information 814, user state/tendency information 816, and/or content data 818, as well as application information 812.

According to an embodiment, the application analysis module 822 may analyze an attribute, an association, an execution pattern of an application, and multi-window related information of the application to identify an association between each application simultaneously being executed. For example, the application analysis module 822 may determine that an association between a navigation application and a music player application is higher than an association between the navigation application and a banking application, based on at least a portion of the information.

The following Table 2 is an example of an analysis result of the application analysis module 822.

**[Table 2]**

| |
|---|
| The first application is a soccer match broadcast screen, is currently playing an advertisement, and is a currently activated screen. The second application is an internet application screen searching for a soccer player mentioned in the first application 30 minutes ago, and currently no manipulation of the user occurs. The third application is a messenger application, and a dialog related to a birthday present for father proceeded until 5 minutes ago. |

According to an embodiment, a device analysis module 824 may analyze information associated with an attribute and a state of an electronic device. For example, the device analysis module 824 may analyze a screen size, a ratio, a resolution, landscape/portrait mode information, a folding state and/or a folding angle of the electronic device, an external device connected through wireless communication, position information, a battery state, detachment/attachment of a stylus pen, or the like, based on stored device state information 814. Upon the analysis, the device analysis module 824 may be further based on at least a portion of application information 812, user state/tendency information 816, and/or content data 818, as well as the device state information 814.

According to an embodiment, a user analysis module 826 may analyze a current behavior state of the user. For example, the user analysis module 826 may determine that the user is currently in certain behavior such as start driving, driving, watching lecture, exercising, playing game, or sleeping, based on stored user state/tendency information 816. Upon the analysis, the user analysis module 826 may be further based on at least a portion of application information 812, device state information 814, and/or content data 818, as well as the user state/tendency information 816.

According to an embodiment, a data analysis module 828 may analyze content data 818 and/or a received alarm in a memory. For example, the data analysis module 828 may analyze an object and a background included in a stored image and video, capture time information, dialog details of the user, registered schedule information, visited area information, and the like. Upon the analysis, the data analysis module 828 may be further based on at least a portion of application information 812, device state information 814, and/or user state/tendency information 816, as well as the content data 818.

According to an embodiment, a usage pattern/preference analysis module 829 may analyze what a usage pattern or a behavior pattern for the electronic device of the user was for each of various situations, based on an analysis result of at least a portion of the application analysis module 822, the device analysis module 824, the user analysis module 826, and the data analysis module 828. The usage pattern/preference analysis module 829 may classify what intention a user's behavior (e.g., rejection, agreement, touch, long click, termination) was an act for. The usage pattern/preference analysis module 829 may pattern behavior of the user for each of various situations, detect a habit of the user, and learn a target (e.g., application, content, another person) that the user prefers or does not prefer.

According to an embodiment, the usage pattern/preference analysis module 829 may analyze a pattern of what behavior the user takes on the electronic device upon occurrence of an event (e.g., reception of a message, location change, use of a stylus pen, Bluetooth connection, start driving, reaching schedule of a calendar, keyword detection) in a specific situation (e.g., place, time, application being used).

According to an embodiment, an analysis result of the usage pattern/preference analysis module 829 may be stored in a usage pattern/preference information database 840. For example, the usage pattern/preference information database 940 may be stored on a memory of the electronic device, or may be stored on an external server, and the external server may obtain usage pattern/preference information of various electronic devices to configure a database.

According to an embodiment, the electronic device may generate a prompt 830 based on an analysis result of the analysis module 820. For example, the electronic device may generate the prompt 830 including information necessary for configuration of a multi-window layout such as a task request for the configuration of the multi-window layout, current operation state information of the electronic device generated based on the analysis result of the analysis module, and/or usage pattern and preference information.

According to an embodiment, in a case where a separate analysis operation is not required such as a connection or disconnection with an external device through short-range wireless communication (e.g., Bluetooth), or folding or unfolding of the electronic device, the electronic device may generate a prompt 834 including details of an occurred event, without going through the analysis module 820.

According to an embodiment, the electronic device may deliver the prompts 830 and 834 including the generated task request to an AI model 860.

According to an embodiment, the AI model 860 may analyze details of the delivered prompts 830 and 834 to configure and/or reconfigure a multi-window layout. The AI model 860 may be trained based on current state information set by a user in various electronic devices, and/or defined by a developer of the electronic device or an application, and information of a currently set multi-window layout. For example, the AI model 860 determines a usage pattern and a tendency of the user based on details of a prompt received from the electronic device and learned data, and determines an importance and a mutual association of each application, to determine a configuration form of a multi-window layout.

According to an embodiment, the AI model 860 may configure a multi-window layout in a form not obscuring information provided in an application as much as possible. For example, in a case where the electronic device configures a fourth application as a pop-up window in a state in which a first application, a second application, and a third application are being executed, the AI model 860 may arrange the pop-up window of the fourth application at a position where an area providing important information in windows of the first application, the second application, and the third application is not obscured. According to an embodiment, in a case where the electronic device is implemented as an XR device, the electronic device may configure a multi-window layout to arrange a window of each application in an area where there is no major object based on information obtained from a front camera of the electronic device, and/or to arrange a window of an application with a high preference in a gaze direction of the user. For example, in a case where a gaze direction of the user wearing the XR device faces a fish tank in which fishes are present, it may be captured through the front camera, and position and size information of each object such as fishes may be included in a prompt and transmitted to the AI model. The AI model may arrange a window of each application at a position where objects (e.g., fishes) are not obscured, based on the delivered information.

According to an embodiment, the AI model 860 may deliver information related to the generated multi-window layout to the electronic device.

According to an embodiment, the electronic device may configure a multi-window layout through a UI module 880 based on a task response received from the AI model 860 and display it on a display. For example, the electronic device determines a position, a size, a form of a window including execution screens of applications being executed based on multi-window layout related information included in the task response received from the AI model 860, and may switch some applications to a pop-up window, or switch to a background.

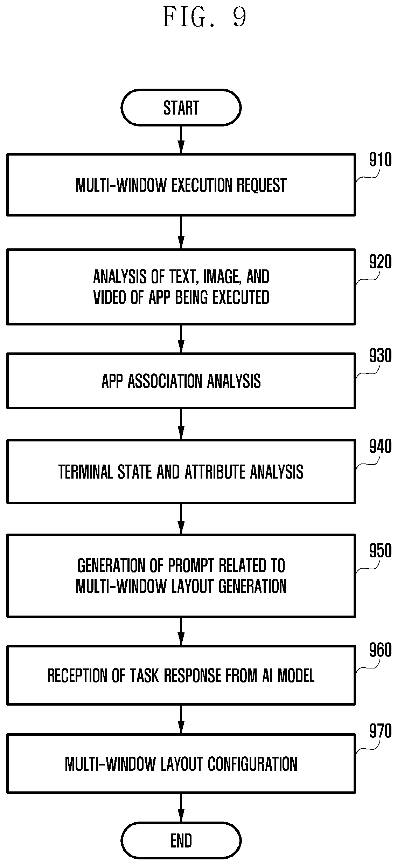

FIG. 9 is a flowchart of a multi-window layout configuration method according to an embodiment.

The illustrated method may be performed by an electronic device (e.g., the electronic device 700 of FIG. 7), and technical features described above may be omitted in the following description.

According to an embodiment, in operation 910, the electronic device may receive a multi-window execution request. For example, in a case where a second application is executed in a state in which a first application is executed and an execution screen of the first application is displayed, the electronic device may detect it as an event triggering a configuration of a multi-window layout.

According to an embodiment, in operation 920, the electronic device may analyze at least a portion of text, image, and video provided in an application being executed. For example, in a case where the application being executed is providing a soccer match broadcast screen, the electronic device may analyze details of content such as a situation mentioned in the broadcast screen, a score, a player name, and product information provided in an advertisement screen, based on at least a portion of text, image, and video output from the corresponding broadcast screen.

According to an embodiment, in operation 930, the electronic device may analyze an association between applications being executed. For example, the electronic device may identify an association between each application installed on the electronic device based on a type and attribute of an application, a manual arrangement record of the user upon multi-window layout configuration, a keyword (or context) being provided in an application obtained through analysis of content, and/or an application execution history. For example, in a case where a frequency of a navigation application and a music player application being simultaneously executed is high, it may be determined that an association thereof is higher than an association between the navigation application and a banking application. According to an embodiment, an electronic device may identify an association between each application based on similarity of a keyword extractable from each application execution screen of multi-windows. For example, in a case where a specific application is real-time streaming a broadcast screen of a soccer match, and a soccer player's profile is being searched through a web browser, the electronic device may determine that the association of the two applications is high. For example, in a case where a compass application and a shopping mall application providing an infant product purchase screen are simultaneously being executed, it may be determined that the association of the two applications is low because similarity of a keyword is low. According to an embodiment, the electronic device may determine an association between applications based on a position of an application window arranged in a multi-window layout. For example, in a case where a user frequently arranges a messenger application and a shopping mall application, or a gallery application and a file application adjacently upon directly configuring a multi-window layout, it may be determined that they are highly associated with each other.

According to an embodiment, in operation 940, the electronic device may analyze a device state and an attribute. For example, the electronic device may analyze a screen size, a ratio, a resolution, landscape/portrait mode information, a folding state and/or a folding angle of the electronic device, an external device connected through wireless communication, position information, a battery state, detachment/attachment of a stylus pen, and the like, based on stored device state information.

According to an embodiment, in operation 950, the electronic device may generate a prompt requesting generation of a multi-window layout. For example, the electronic device may generate a prompt including information necessary for configuration of a multi-window layout such as a task request for the configuration of the multi-window layout, current operation state information of the electronic device generated based on an analysis result of operation 920 and/or operation 930, and/or usage pattern and preference information.

According to an embodiment, the electronic device may deliver the generated prompt to an AI model.

According to an embodiment, the AI model may analyze details of the generated prompt to configure and/or reconfigure a multi-window layout. The AI model may be trained based on current state information set by a user in various electronic devices, and/or defined by a developer of the electronic device or an application, and information of a currently set multi-window layout. For example, the AI model determines a usage pattern and a tendency of the user based on details of a prompt received from the electronic device and learned data, and determines an importance and a mutual association of each application, to determine a configuration form of a multi-window layout.

According to an embodiment, in operation 960, the electronic device may receive a task response including information related to the configuration of the multi-window layout from the AI model.

According to an embodiment, in operation 970, the electronic device may configure a multi-window layout based on the task response received from the AI model and display it through a display.

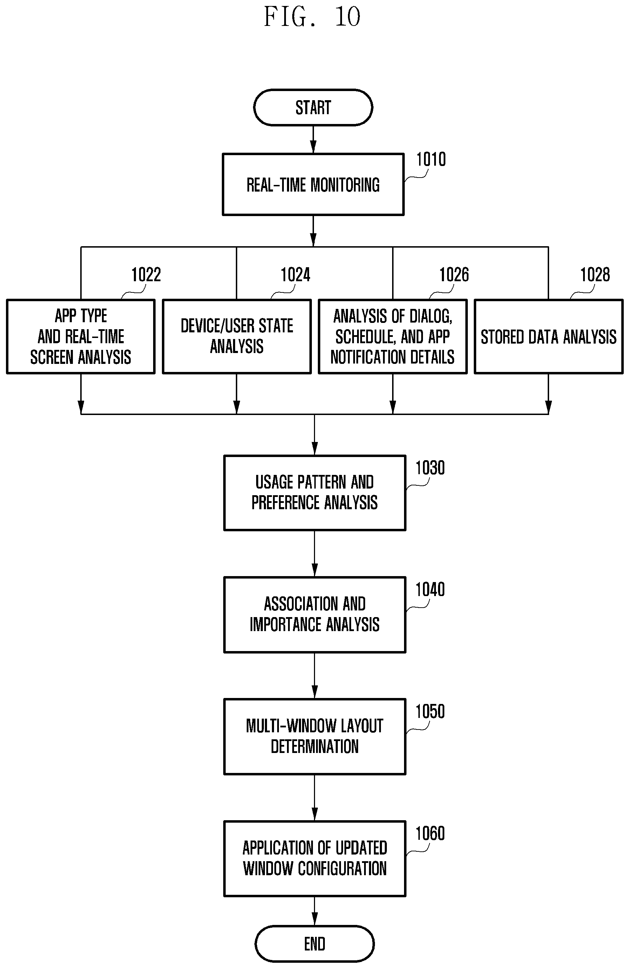

FIG. 10 is a flowchart of a multi-window layout configuration method according to an embodiment.

The illustrated method may be performed by an electronic device (e.g., the electronic device 700 of FIG. 7), and technical features described above may be omitted in the following description.

According to an embodiment, in operation 1010, the electronic device may monitor an application and a device state in real time. For example, the electronic device stores application information, device state information, user state/tendency information, and content data, and monitors whether the stored information is changed, to update changed data in real time.

According to an embodiment, in operation 1022, the electronic device may analyze a type and a real-time screen of an application being executed. For example, the type of the application may include kinds such as a media player, a messenger, a document, a calendar, a calculator, and a game. According to an embodiment, the electronic device may analyze text, an image, and a video of content being provided in an application being executed to analyze details currently being provided.

According to an embodiment, in operation 1024, the electronic device may analyze a state of the electronic device and the user. For example, the electronic device may analyze information such as device current state information such as current position information, surrounding information, a moving path, detachment/attachment of a stylus pen, a folding/unfolding state and/or a folding angle in a case of a foldable device, a slider-in/slide-out state and/or a display extension distance in a case of a slidable device, and a VR/MR/AR operation mode, a field of view (FoV), and rotation/movement information in a case of an XR device.

According to an embodiment, in operation 1026, the electronic device may analyze dialog, a schedule, and notification details. For example, the electronic device may analyze dialog details registered through a message, an SNS application, and a schedule registered through a calendar application and/or notification details occurred according to reception of a message.

According to an embodiment, in operation 1028, the electronic device may analyze stored data. For example, the electronic device may analyze an image captured through a camera, video data, generated document data, and/or various data generated in several applications.

According to an embodiment, in operation 1030, the electronic device may analyze a usage pattern and preference based on an analysis result of the operation 1022 to operation 1028. For example, the electronic device may classify what intention a user's behavior (e.g., rejection, agreement, touch, long click, termination) was an act for. The electronic device may pattern behavior of the user for each of various situations, detect a habit of the user, and learn a target (e.g., application, content, another person) that the user prefers or does not prefer. According to an embodiment, the electronic device may analyze a history related to a multi-window layout configuration of the user, to analyze which application was configured in which layout according to a usage pattern.

According to an embodiment, in operation 1040, the electronic device may determine an association between applications being executed and an importance of each application. For example, the electronic device may determine that an association is high between applications with a high frequency of simultaneous execution. In addition, an application with a high execution frequency in a background may be determined as having a low importance.

According to an embodiment, in operation 1050, the electronic device may determine a multi-window layout. For example, the electronic device may configure a multi-window layout based on an analyzed usage pattern and preference, an association and an importance between applications being executed.

According to an embodiment, at least a portion of the analysis operations of operation 1022 to 1040 and the multi-window layout configuration operation of operation 1050 may be performed by the electronic device or an AI model. For example, in a case where the operation is performed by the AI model, in order to cause the AI model to perform some operation, the electronic device may generate a prompt including at least a portion of stored data and an analysis result and a task request related to the configuration of the multi-window layout and deliver it to the AI model. The AI model may analyze the prompt to configure a multi-window layout, and deliver a task response including information related to the multi-window layout to the electronic device. For example, in a case where the operation is performed by the electronic device, the electronic device (e.g., a processor) may analyze given data according to a determined algorithm to configure a multi-window layout.

According to an embodiment, in operation 1060, the electronic device may configure an updated multi-window layout and display an execution screen of each application.

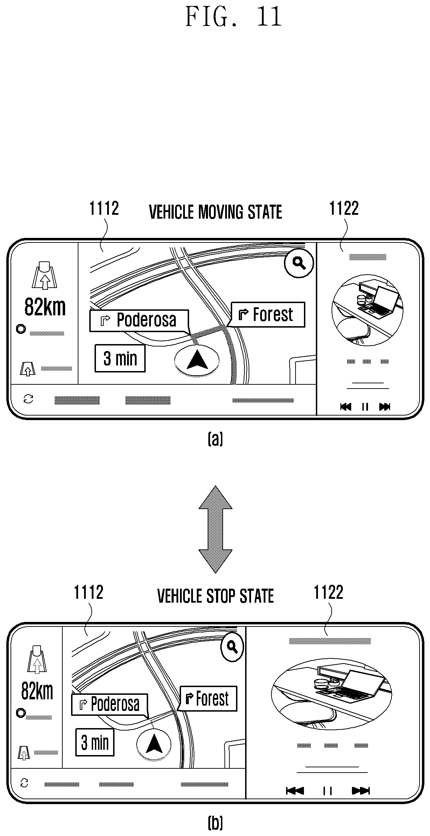

FIG. 11 illustrates an example of reconfiguring a multi-window layout according to an embodiment.

According to an embodiment, the electronic device performs an analysis (e.g., the analysis module 820 of FIG. 8) on stored data (e.g., the data 810 of FIG. 8), determines a user's intention or a purpose by extracting a keyword based on an analysis result, and may generate a prompt (e.g., the prompt 830 of FIG. 8) for requesting the configuration of the multi-window layout therefrom.

According to an embodiment, in a case where a user is currently driving, the electronic device may determine that a usage pattern/preference of the user during driving is listening to music while viewing navigation based on an analysis result. In this case, the electronic device may generate a prompt including a task request as in the following Table 3 and deliver it to the AI model.

**[Table 3]**

| |
|---|
| I am driving, and my usage pattern is simultaneously executing navigation and music during driving. Increase an importance of navigation during driving, configure a layout for simultaneous execution of navigation and music, and execute them in multi-windows. |

According to an embodiment, the electronic device may generate the prompt and deliver it to the AI model in a case where a touch input or a voice input for multi-window execution of the user occurs. Alternatively, the electronic device may automatically generate the prompt and deliver it to the AI model based on speed/acceleration information, distance measurement through UWB communication (e.g., an approach direction to a vehicle or a position within a vehicle), and/or information delivered from a sensor placed within a vehicle (e.g., identification of seating on a seat from a sensor placed in a driver seat) in a case where it is recognized that the user is driving, or in a case where short-range wireless communication (e.g., Bluetooth) with the vehicle is connected. According to an embodiment, the AI model executes a task according to the prompt request, and may generate a task response including information related to a layout in a form in which the navigation application is arranged in a left window close to the user, the music application is arranged in a right window, and a size ratio is 8 to 2 in a multi-window layout, and provide it to the electronic device. For example, the electronic device executes the navigation application and the music application, displays the navigation application on a left, displays the music application on a right according to a layout determined in the task response received from the AI model as illustrated in (a) of FIG. 11, and may configure multi-windows with the size ratio being 8 to 2.

According to an embodiment, in a state in which the electronic device configures the multi-window layout as in (a) of FIG. 11, in a case where an event triggering a layout change is detected, the electronic device may generate a prompt including the event and current state information for reconfiguration of the layout and deliver it to the AI model. Here, the event triggering the layout change may include events such as a change in device state, a change in user state, and reception of a notification.

According to an embodiment, in a state in which a navigation application 1112 and a music application 1122 are configured as a multi-window layout and displayed through a display as in (a) of FIG. 11, in a case where it is identified that the vehicle stops based on a sensor (e.g., acceleration sensor) of the electronic device or information delivered from the vehicle, the electronic device may determine that the event triggering the layout change occurred. In a state in which the vehicle stops, since a touch input for the display of the user is easy, making a touch input related to music playback control may correspond to a usage pattern of the user.

According to an embodiment, upon stop of the vehicle, the electronic device may generate a prompt as in the following Table 4 and deliver it to the AI model.

**[Table 4]**

| |
|---|
| The vehicle stopped. Reconfigure the multi-window layout to further expand an area of the music application in a state in which the vehicle stops. |

According to an embodiment, an AI model may execute a task according to the prompt request, and generate a task response including information related to a layout in which a size of windows of a navigation application and a music application is 1 to 1, and provide it to the electronic device. With reference to (b) of FIG. 11, the electronic device may reduce a size of a navigation application 1112 and expand a size of a music application 1122, to reconfigure a layout such that the size of the windows of the navigation application 1112 and the music application 1122 is substantially 1 to 1 and display it on a display. According to an embodiment, the AI model may provide information related to an additional layout change as a task response to the electronic device based on usage pattern and preference information. For example, in a case where the vehicle moves again, the AI model may generate information related to a layout in a form of gradually reducing the area of the music application to 20% based on a moving speed as a task response and provide it to the electronic device. The electronic device may reconfigure the layout in a manner of gradually reducing the area of the music application from 50% to 20% based on the moving speed upon departure of the vehicle, based on the task response received from the AI model, without requesting an additional prompt.

According to an embodiment, in a case where it is detected that fatigue of a user increases or concentration decreases based on biometric information of the user obtained through a wearable device (e.g., a smart watch) worn by the user, the electronic device may generate a prompt including a task request including corresponding information and deliver it to the AI model. For example, the AI model may execute a task to deliver information related to a layout increasing the size of the navigation application to the electronic device as a task response. In this case, the AI model may include information related to a music track for improvement of the concentration of the user in the music application in the task response, and the electronic device may change playback to the corresponding music track in the music application.

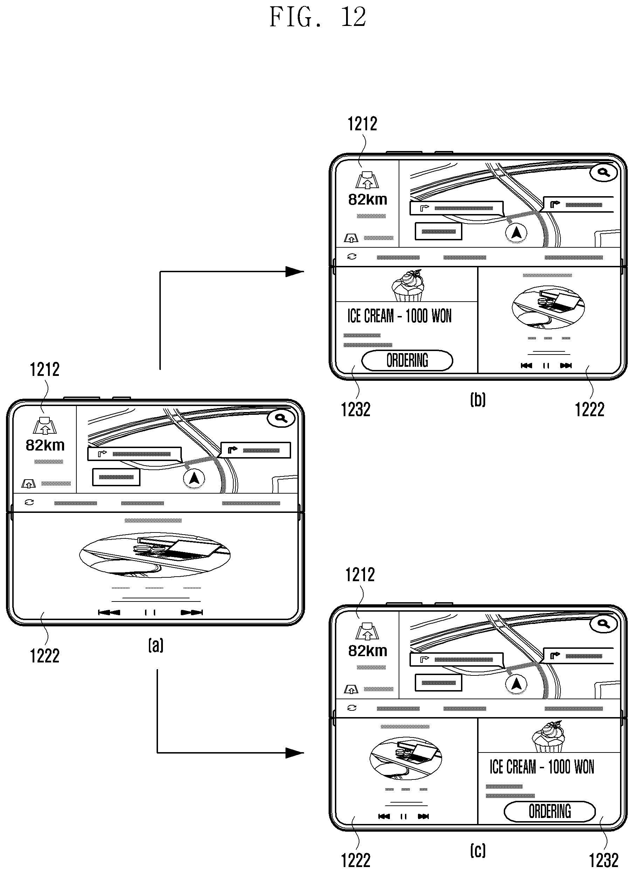

FIG. 12 illustrates an example of reconfiguring a multi-window layout according to an embodiment.

According to an embodiment, an electronic device (e.g., the electronic device 700 of FIG. 7) may configure a multi-window layout including an execution screen of an additionally executed application based on current position information and/or surrounding information.

According to an embodiment, the electronic device may obtain current position information of the electronic device based on a global positioning system (GPS) or wireless communication (e.g., cellular wireless communication, short-range wireless communication). In addition, the electronic device may scan a wireless signal transmitted from an adjacent external device through short-range wireless communication (e.g., Wi-Fi, Bluetooth, BLE) to obtain surrounding information related to a place such as a shop or a hospital located in a vicinity. The electronic device may store and update the obtained position information and/or surrounding information on a device stored in a memory.

According to an embodiment, in a case where a user is driving, a navigation application and a music application may be executed according to a selection of the user, or the navigation application and the music application may be executed according to a layout configuration by an AI model. In this case, the electronic device may configure a multi-window layout in which a navigation application 1212 is arranged at an upper end and a music application 1222 is arranged at a lower end, as in (a) of FIG. 12.

According to an embodiment, in a case where the user moves near a drive-through store of a coffee shop, the electronic device may identify that the user is moving near the store according to the position information and the surrounding information. For example, the electronic device may determine that the user is moving near the store based on information such as a moving path, a past moving pattern, payment details, message details, and an application execution history. Alternatively, in a case of requesting an order at a specific store through an ordering application, the electronic device may determine that the user is moving near the store.

According to an embodiment, in a case where it is identified that the user is moving near a specific store, the electronic device may generate a prompt as in the following Table 5 and deliver it to the AI model for reconfiguration of a layout.

**[Table 5]**

| |
|---|
| If the vehicle stops at a traffic light with a distance to a coffee shop within 500m, configure a layout including an ordering application such that a driver can make an order. |

For example, a past behavior pattern of the user is executing an ordering application and ordering coffee upon stop within 500m of a coffee shop, and the electronic device may recognize this from stored data and generate the prompt as described above. According to an embodiment, the electronic device may reconfigure a multi-window layout based on a task response received from the AI model. According to an embodiment, the electronic device may execute an ordering application 1232 as in (b) or (c) of FIG. 12, and add the ordering application 1232 to the previously executed navigation application 1212 and music application 1222, to reconfigure into a layout including 3 windows.

According to an embodiment, as a result identified through the prompt, in a case where only a driver is currently boarding the vehicle, the AI model may configure a layout in which the ordering application 1232, of which an input of the user is expected, is displayed at a left position adjacent to the user and the music application 1222, of which an input frequency is expected to be low, is displayed at a right position as in (b) of FIG. 12, and transmit a task response including the layout related information to the electronic device.

According to an embodiment, as a result identified through the prompt, in a case where a fellow passenger other than the driver is currently boarding the vehicle, the AI model may configure a layout in which the ordering application 1232 is displayed at a right position adjacent to the fellow passenger located on a right of the driver as in (c) of FIG. 12, and transmit a task response including the layout related information to the electronic device. For example, the electronic device recognizes that the fellow passenger makes an order in a case where there is a fellow passenger in the vehicle in a behavior pattern of the user, and may include such information in a prompt to be delivered to the AI model.

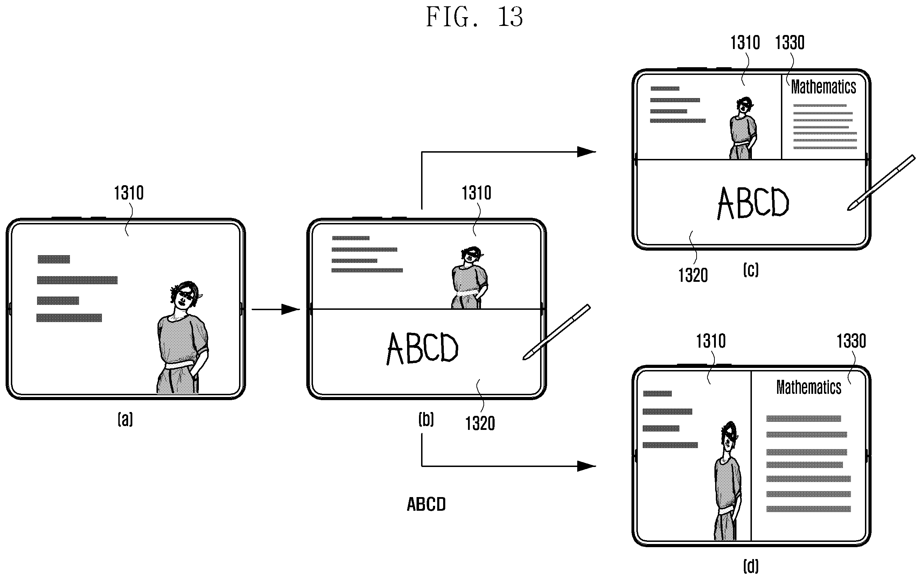

FIG. 13 illustrates an example of reconfiguring a multi-window layout according to an embodiment.

According to an embodiment, in a case where a change in device state is detected, the electronic device may perform an operation for configuring or reconfiguring a multi-window layout. For example, the device state information may include at least a portion of a current battery state, an activation/connection/quality state of wireless communication (e.g., cellular wireless communication, Bluetooth, Wi-Fi), an external device (e.g., Wi-Fi access point, another electronic device) connected through wireless communication, position information based on GPS and/or wireless communication, a moving path, a relative position between a user or another electronic device and the electronic device, detachment/attachment of a stylus pen, a folding/unfolding state and/or a folding angle in a case of a foldable device, a slider-in/slide-out state and/or a display extension distance in a case of a slidable device, and a VR/MR/AR operation mode, a field of view (FoV), and rotation/movement information in a case of an XR device, and is not limited thereto. The electronic device may store the device state information as described above in a memory, and/or monitor it in real time to detect the change thereof.

With reference to (a) of FIG. 13, the electronic device executes a lecture application 1310 and may provide content of the lecture application 1310 in a single window layout. The lecture application 1310 may include video and text content.

According to an embodiment, in a state as in (a) of FIG. 13, the electronic device may detect an operation of separating a stylus pen. The electronic device recognizes that a usage pattern of the user is executing a note application upon separation of the stylus pen, and executes a note application 1320 as in (b) of FIG. 13, to configure the lecture application 1310 and the note application 1320 as a multi-window layout and display them.

According to an embodiment, the electronic device may analyze details of content provided in the lecture application 1310 in real time, and determine that execution of a textbook application is necessary.

According to an embodiment, the electronic device executes a textbook application 1330, and in a case where the user is currently making a handwriting input for the note application 1320, the electronic device may configure the lecture application 1310, the note application 1320, and the textbook application 1330 as multi-windows and display them as in (c) of FIG. 13. Alternatively, in a case where the user is not making a handwriting input for the note application 1320, the electronic device terminates execution of the note application 1320 as in (d) of FIG. 13, and may configure the lecture application 1310 and the textbook application 1330 as multi-windows and display them.

According to an embodiment, the operation of configuring the multi-window layout described above may be performed by an AI model. The electronic device generates a prompt including details of content detected in the lecture application being executed and a separation event of the stylus pen and delivers it to the AI model, and the AI model may configure a multi-layout based on the delivered prompt and an analysis result of the usage pattern of the user.

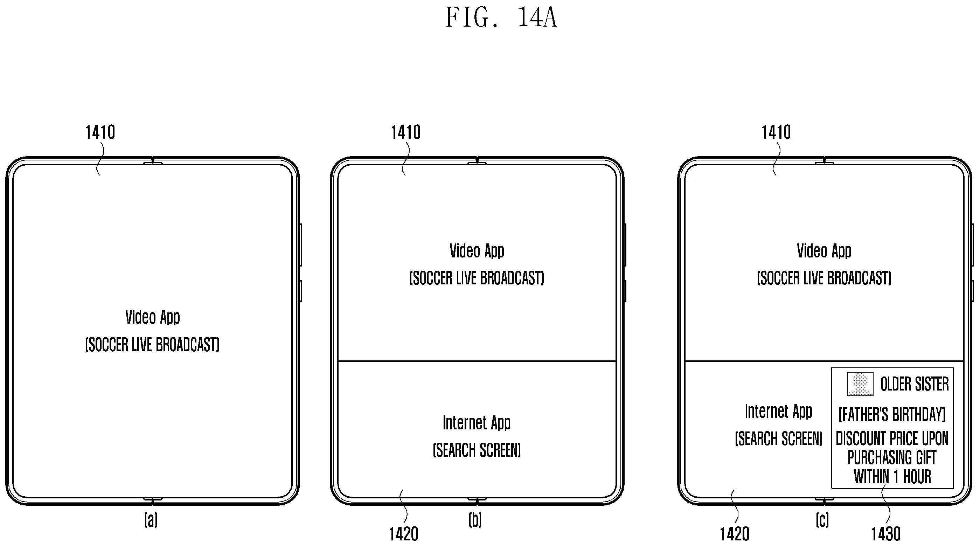

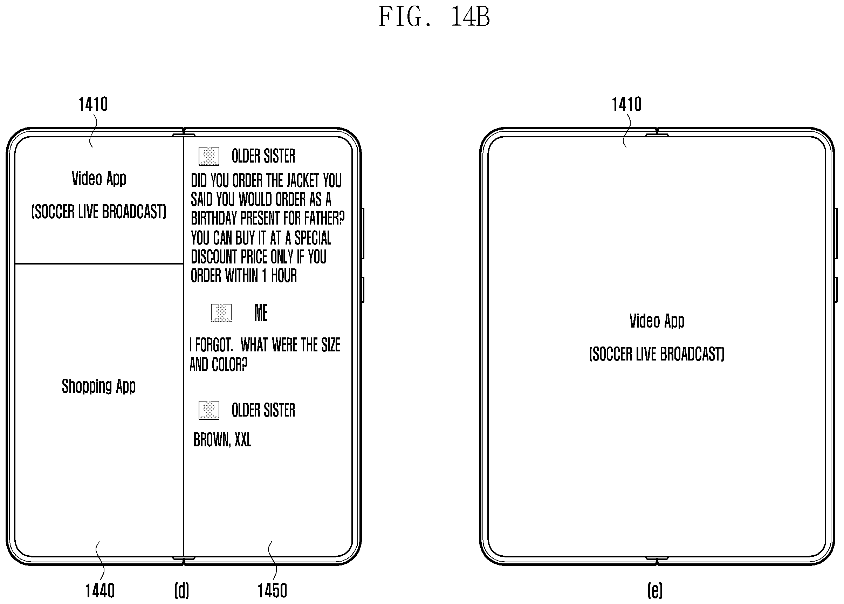

FIG. 14 illustrates an example of configuring a multi-window layout according to an embodiment.

With reference to (a) of FIG. 14, an electronic device may execute a video application 1410 and display the video application 1410 on an entire screen, and content provided by the video application may include a soccer broadcast. For example, photos, videos, a schedule, and/or dialog details related to soccer may be stored on the electronic device, and the electronic device may recognize that a user is highly interested in soccer by analyzing stored data.

According to an embodiment, the electronic device may identify that the user has a high interest in a corresponding application by analyzing details of content provided through an application being executed and data stored in the electronic device. For example, the electronic device may determine that a soccer broadcast currently provided in the video application has a high priority for the user by analyzing a title provided through the video application, words of a commentator, whether it is a live broadcast, a schedule stored in a calendar application, and/or information of a recently stored image.

According to an embodiment, the electronic device may trigger a configuration of a multi-window layout by analyzing details of content provided in an application being executed. For example, the electronic device analyzes an image, text, and a sound output from the video application 1410, recognizes a name of a specific player related to the soccer broadcast, and may identify a usage pattern in which the user searched for the name of the corresponding player through the Internet. In this case, the usage pattern of the user may have been executing an internet application at a size and a position to an extent of not interfering with a soccer broadcast video. The electronic device may generate a prompt including a task request related to the configuration of the multi-window layout as in the following Table 6 based on such an analysis result.

**[Table 6]**

| |
|---|
| The video application was displayed on an entire screen, a video is in a playback state, connected Bluetooth devices are ear buds and a Bluetooth keyboard, language such as "Player A is making his first appearance" was detected from details of the video, and other applications mainly used by the user when watching a soccer broadcast through the video application are an internet application, a calendar application, and a calculator application. If screen renewal is necessary, finally determine whether to execute as a multi-window or a pop-up window, whether to reduce to a widget form, whether to terminate an application, whether a size adjustment of a window is necessary, or whether an arrangement change of a window is necessary, and deliver a position, a size, a window type, and numerical data of each application. |

According to an embodiment, the electronic device delivers the generated prompt to an AI model, and may configure a multi-window layout based on a task response received from the AI model. For example, the AI model arranges the video application 1410 at an upper end and the internet application 1420 at a lower end, but configures a multi-window layout in which the video application 1410 has a larger area, and may deliver information related to a position and a size of each window to the electronic device as a task response, and the electronic device may configure a multi-window layout including execution screens of the video application 1410 and the internet application 1420 and display it on a display as in (b) of FIG. 14. According to an embodiment, in a state of outputting the multi-window layout configured as in (b) of FIG. 14, the electronic device may identify a received message of a message application. Unlike previous execution of the internet application, the electronic device may identify that a usage pattern of the user is a pattern of not identifying a message during video viewing. The electronic device may generate a prompt as in the following Table 7 in response to reception of the message and deliver it to the AI model.

**[Table 7]**

| |
|---|
| A message from older sister saying "Did you order the jacket you said you would order as a birthday present for father? You can buy it at a special discount price only if you order within 1 hour" arrived. Currently, the video application and the internet application are being executed in multi-windows, a video is in a playback state, connected Bluetooth devices are ear buds and a Bluetooth keyboard, language such as "The first half has ended" was detected from details of the video, and other applications mainly used by the user when watching a soccer broadcast through the video application are an internet application, a calendar application, and a calculator application. If screen renewal is necessary, finally determine whether to execute as a multi-window or a pop-up window, whether to reduce to a widget form, whether to terminate an application, whether a size adjustment of a window is necessary, or whether an arrangement change of a window is necessary, and deliver a position, a size, a window type, and numerical data of each application. |

According to an embodiment, the AI model may configure a multi-window layout adding the message application as a pop-up window 1430 by analyzing details of the received prompt and the usage pattern of the user. As in (c) of FIG. 14, the electronic device may display the pop-up window 1430 of the message application by overlaying it on the internet application 1420. According to an embodiment, the electronic device may detect a touch input of the user for the pop-up window 1430 of the message application. In this case, the electronic device may generate a prompt as in the following Table 8 and deliver it to the AI model.

**[Table 8]**

| |
|---|
| A video is in a playback state, connected Bluetooth devices are ear buds and a Bluetooth keyboard, a volume of the video was lowered to 0, and other applications mainly used by the user when watching a soccer broadcast through the video application are an internet application, a calendar application, and a calculator application. If screen renewal is necessary, finally determine whether to execute as a multi-window or a pop-up window, whether to reduce to a widget form, whether to terminate an application, whether a size adjustment of a window is necessary, or whether an arrangement change of a window is necessary, and deliver a position, a size, a window type, and numerical data of each application. |

According to an embodiment, the AI model may determine to terminate the internet application 1420 (or execute it in a background) and additionally execute a shopping application 1440, considering that a preference of the user decreased due to an operation of the user touching the pop-up window 1430, details input by the user to the message application, and volume adjustment of the video application 1410. In addition, the AI model recognizes that the message application 1450 has a high priority, and recognizes that the video application 1410 has a low priority, and may configure a multi-window layout displaying the message application 1450 on a right, the video application 1410 at an upper left in a small size, and the shopping application 1440 at a lower left in a large size as in (d) of FIG. 14, and deliver it to the electronic device. According to an embodiment, in a state of displaying the multi-window layout as in (d) of FIG. 14, the electronic device may detect that the user completed an order in the shopping application 1440, a dialog with a counterpart ended in the message application 1450, and that a second half of the soccer broadcast starts in the video application 1410. In this case, the electronic device may generate a prompt as in the following Table 9 and deliver it to the AI model.

**[Table 9]**

| |
|---|
| In the shopping application, keywords such as order complete, thank you, and jacket are visible, in the video application, details such as "The second half will start soon" was detected, and in the message application, no additional message is being transmitted after a message "Yes." Based on a pattern, a preference, and analyzable information of a user previously informed, if screen renewal is necessary, finally determine whether to execute as a multi-window or a pop-up window, whether to reduce to a widget form, whether to terminate an application, whether a size adjustment of a window is necessary, or whether an arrangement change of a window is necessary, and deliver a position, a size, a window type, and numerical data of each application. |

According to an embodiment, an AI model may recognize that a priority of a message application 1410 and a shopping application 1440 decreased for the user based on details of a prompt and a usage pattern of the user. In addition, the AI model recognizes from application information that the message application 1450 and the shopping application 1440 have a high association, and the message application 1450 and a video application 1410 have a low association, and may determine to terminate (or execute in a background) the shopping application 1440 and the message application 1450. Accordingly, the AI model may configure a single window layout displaying the video application 1410 on an entire screen, and deliver related information to an electronic device. The electronic device may display the video application 1410 on the entire screen as in (e) of FIG. 14 based on the received task response. An electronic device according to various embodiments of the present document may include a display 730, a communication module 740, a memory 720, and at least one processor 710 operatively connected to the display, the communication module, and the memory.

According to an embodiment, the memory may store instructions that are executed by the at least one processor, and, when executed, cause the electronic device to execute a first application to display an execution screen of the first application on at least a partial area of the display.

According to an embodiment, the memory may store instructions that cause the electronic device, in a state in which the first application is being executed, to detect a first event triggering a configuration of a multi-window layout according to execution of a second application, in response to the detection of the first event, to generate a prompt including information related to the detected first event and a task request for requesting the configuration of the multi-window layout, and to deliver the generated prompt to an AI model.

According to an embodiment, the memory may store instructions that cause the electronic device to receive, from the AI model, a task response comprising information related to a multi-window layout to be configured in response to the first event, and based on the received task response, to configure a multi-window layout including the execution screen of the first application and an execution screen of the second application, to display the multi-window layout on at least a partial area of the display.

According to an embodiment, the memory may store instructions that cause the electronic device to analyze information stored in the memory to analyze a usage pattern related to the first application and the second application, and to generate the prompt including the analyzed usage pattern.

According to an embodiment, the memory may store at least one of application information 812 related to applications stored in the memory, device state information 814 related to a state of the electronic device, user state/tendency information 816, or content data 818.

According to an embodiment, the memory may store instructions that cause the electronic device to analyze at least a portion of application information, device state information, user state/tendency information, or content data stored in the memory to determine current operation state information of the electronic device.

According to an embodiment, the memory may store instructions that cause the electronic device to identify content being provided in the first application or the second application, and to determine current operation state information of the electronic device based on details of the content.

According to an embodiment, the memory may store instructions that cause the electronic device to determine current operation state information of the electronic device by analyzing position information or surrounding information of the electronic device.

According to an embodiment, the memory may store instructions that cause the electronic device to determine current operation state information of the electronic device based on information delivered from an external device connected through the communication module.

According to an embodiment, the task response may include information related to a size and a position of a first window including the execution screen of the first application and a second window including the execution screen of the second application.

According to an embodiment, the memory may include instructions that cause the electronic device, in a state in which the multi-window layout is displayed on at least a partial area of the display, to detect a second event triggering a change of a layout, in response to the detection of the second event, to generate a prompt including information related to the detected first event and a task request for requesting reconfiguration of the multi-window layout, to deliver the generated prompt to the AI model, to receive, from the AI model, a task response including information related to a multi-window layout to be reconfigured in response to the second event, and based on the received task response, to reconfigure the multi-window layout to display the multi-window layout on at least a partial area of the display.

According to an embodiment, the memory may store instructions that cause the electronic device to determine that a change of the layout is necessary based on content being provided in the first application or the second application.

A method performed by an electronic device, according to various embodiments of the present document, may comprise: executing a first application to display an execution screen of the first application; in a state in which the first application is being executed, detecting a first event triggering a configuration of a multi-window layout according to execution of a second application; in response to the detection of the first event, generating a prompt including information related to the detected first event and a task request for requesting the configuration of the multi-window layout; delivering the generated prompt to an AI model; receiving, from the AI model, a task response including information related to a multi-window layout to be configured in response to the first event; and based on the received task response, configuring a multi-window layout including the execution screen of the first application and the execution screen of the second application, to display the multi-window layout.

According to an embodiment, the method may include an operation of analyzing information stored in the electronic device to analyze a usage pattern related to the first application and the second application, and an operation of generating the prompt including the analyzed usage pattern.

According to an embodiment, the electronic device may store at least one of application information related to applications, device state information related to a state of the electronic device, user state/tendency information, or content data.

According to an embodiment, the method may include an operation of determining current operation state information of the electronic device by analyzing at least a portion of the stored application information, device state information, user state/tendency information, or content data.

According to an embodiment, the operation of determining current operation state information of the electronic device may include an operation of identifying content being provided in the first application or the second application, and an operation of determining current operation state information of the electronic device based on details of the content.

According to an embodiment, the operation of determining current operation state information of the electronic device may include an operation of determining current operation state information of the electronic device by analyzing position information or surrounding information of the electronic device.

According to an embodiment, the operation of determining current operation state information of the electronic device may include an operation of determining current operation state information of the electronic device based on information delivered from an external device connected through wireless communication.

According to an embodiment, the task response may include information related to a size and a position of a first window including the execution screen of the first application and a second window including the execution screen of the second application.

According to an embodiment, the method may include an operation of, in a state in which the multi-window layout is being displayed, detecting a second event triggering a change of a layout, an operation of, in response to the detection of the second event, generating a prompt including information related to the detected first event and a task request for requesting reconfiguration of the multi-window layout, an operation of delivering the generated prompt to the AI model, an operation of receiving, from the AI model, a task response including information related to a multi-window layout to be reconfigured in response to the second event, and an operation of, based on the received task response, reconfiguring the multi-window layout to display the multi-window layout.

A computer-readable non-transitory recording medium, according to various embodiments of the present document, may store instructions for performing: executing a first application to display an execution screen of the first application; in a state in which the first application is being executed, detecting a first event triggering a configuration of a multi-window layout according to execution of a second application; in response to the detection of the first event, generating a prompt including information related to the detected first event and a task request for requesting the configuration of the multi-window layout; delivering the generated prompt to an AI model; receiving, from the AI model, a task response including information related to a multi-window layout to be configured in response to the first event; and based on the received task response, configuring a multi-window layout including the execution screen of the first application and the execution screen of the second application, to display the multi-window layout.

The electronic device according to various embodiments disclosed in the present document may be a device in various forms. The electronic device may include, for example, a portable communication device (e.g., a smartphone), a computer device, a portable multimedia device, a portable medical device, a camera, a wearable device, or a home appliance. The electronic device according to the embodiment of the present document is not limited to the above-mentioned devices.

Various embodiments of the present document and the terms used in the embodiments are not intended to limit the technical features disclosed in the present document to the particular embodiments and should be understood as including various alterations, equivalents, or alternatives of the corresponding embodiments. In connection with the description of the drawings, the similar reference numerals may be used for the similar or relevant constituent elements. The singular form of a noun corresponding to an item may include one or plurality of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "1st" and "2nd," or "first" and "second" may be used to simply distinguish a corresponding constituent element from another, and does not limit the constituent elements in other aspect (e.g., importance or order). When a constituent element (e.g., a first constituent element) is referred to, with or without the term "operatively" or "communicatively," as "coupled with," "coupled to," "connected with," or "connected to" another constituent element (e.g., a second constituent element), it means that the constituent element may be coupled with the other constituent element directly (e.g., wiredly), wirelessly, or via a third constituent element.

The term "module" used in various embodiments of the present document may include a unit implemented in hardware, software, or firmware, and may interchangeably be used with other terms, for example, "logic," "logic block," "component (or part)," or "circuitry". The module may be a single integral component (i.e., part), or a minimum unit or portion thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, the processor (e.g., processor 120) of the machine (e.g., electronic device 101) may invoke and execute at least one of one or more instructions stored from the storage medium. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Here, "non-transitory" only means that the storage medium is a tangible device and does not include signals (e.g., electromagnetic waves), and this term does not distinguish between the case where the data is stored on the storage medium semi-permanently and the case where the data is stored temporarily.

According to the embodiment, a method according to various embodiments disclosed in the present document may be included and provided in a computer program product. The computer program product may be traded as a product between a seller and a buyer. The computer program product may be distributed in the form of a machine-readable storage medium (e.g., compact disc read only memory (CD-ROM)), or it may be distributed online (e.g., downloaded or uploaded) through an application store (e.g., Play Store^{™}) or directly between two user devices (e.g., smartphones). In case of the distribution online, at least part of the computer program product may be temporarily generated or at least temporarily stored in the machine-readable storage medium, such as memory of the manufacturer's server, a server of the application store, or a relay server.

According to various embodiments, each constituent element (e.g., module or program), among the above-mentioned constituent elements, may include a single object or a plurality of objects, and some of the plurality of objects may be disposed (or arranged) separately in different constituent elements. According to various embodiments, one or more constituent elements, among the above-mentioned constituent elements, or operations may be omitted, or one or more other constituent elements or operations may be added. Alternatively or additionally, a plurality of constituent elements (e.g., modules or programs) may be integrated into a single constituent element. In this case, the integrated constituent element may perform one or more functions of each of the plurality of constituent elements in the same or similar manner as they are performed by a corresponding one of the plurality of constituent elements before the integration. According to various embodiments, operations performed by the module, the program, or another constituent element may be carried out sequentially, in parallel, repeatedly, or heuristically, or one or more of the operations may be executed in a different order or omitted, or one or more other operations may be added.

## Claims

1. An electronic device, comprising:
a display (730);
a communication module (740);
a memory (720); and
at least one processor (710) operatively connected to the display, the communication module, and the memory,
wherein the memory stores instructions that are executed by the at least one processor, and, when executed, cause the electronic device to:
execute a first application to display an execution screen of the first application on at least a partial area of the display;
in a state in which the first application is being executed, detect a first event triggering a configuration of a multi-window layout according to execution of a second application;
in response to the detection of the first event, generate a prompt comprising information related to the detected first event and a task request for requesting the configuration of the multi-window layout;
deliver the generated prompt to an AI model;
receive, from the AI model, a task response comprising information related to a multi-window layout to be configured in response to the first event; and
based on the received task response, configure a multi-window layout comprising the execution screen of the first application and an execution screen of the second application, to display the multi-window layout on at least a partial area of the display.

2. The electronic device of claim 1, wherein the memory stores instructions that cause the electronic device to analyze information stored in the memory to analyze a usage pattern related to the first application and the second application, and to generate the prompt comprising the analyzed usage pattern.

3. The electronic device of claim 1 or 2, wherein the memory stores at least one of application information (812) related to applications stored in the memory, device state information (814) related to a state of the electronic device, user's state/tendency information (816), or content data (818).

4. The electronic device of claim 3, wherein the memory stores instructions that cause the electronic device to analyze at least a portion of the application information, the device state information, the user state/tendency information, or the content data stored in the memory to determine current operation state information of the electronic device.

5. The electronic device of claim 4, wherein the memory stores instructions that cause the electronic device to identify content being provided in the first application or the second application, and to determine the current operation state information of the electronic device based on details of the content.

6. The electronic device of claim 4, wherein the memory stores instructions that cause the electronic device to determine the current operation state information of the electronic device by analyzing position information or surrounding information of the electronic device, and/or to determine the current operation state information of the electronic device based on information delivered from an external device connected through the communication module.

7. The electronic device of any one of claims 1 to 6, wherein the task response comprises information related to a size and a position of a first window comprising the execution screen of the first application and a second window comprising the execution screen of the second application.

8. The electronic device of any one of claims 1 to 7, wherein the memory comprises instructions that cause the electronic device to:
in a state in which the multi-window layout is being displayed on at least a partial area of the display, detect a second event triggering a change of a layout;
in response to the detection of the second event, generate a prompt comprising information related to the detected first event and a task request for requesting reconfiguration of the multi-window layout;
deliver the generated prompt to the AI model;
receive, from the AI model, a task response comprising information related to a multi-window layout to be reconfigured in response to the second event; and
based on the received task response, reconfigure the multi-window layout to display the multi-window layout on at least a partial area of the display.

9. The electronic device of claim 8, wherein the memory stores instructions that cause the electronic device to determine that the change of the layout is necessary based on content being provided in the first application or the second application.

10. A method performed by an electronic device, the method comprising:
executing a first application to display an execution screen of the first application;
in a state in which the first application is being executed, detecting a first event triggering a configuration of a multi-window layout according to execution of a second application;
in response to the detection of the first event, generating a prompt comprising information related to the detected first event and a task request for requesting the configuration of the multi-window layout;
delivering the generated prompt to an AI model;
receiving, from the AI model, a task response comprising information related to a multi-window layout to be configured in response to the first event; and
based on the received task response, configuring a multi-window layout comprising the execution screen of the first application and the execution screen of the second application, to display the multi-window layout.

11. The method of claim 10, comprising:
analyzing information stored in the electronic device to analyze a usage pattern related to the first application and the second application; and
generating the prompt comprising the analyzed usage pattern.

12. The method of claim 10, wherein the determining of current operation state information of the electronic device comprises at least one of:
identifying content being provided in the first application or the second application, and determining the current operation state information of the electronic device based on details of the content;
determining the current operation state information of the electronic device by analyzing position information or surrounding information of the electronic device; or
determining the current operation state information of the electronic device based on information delivered from an external device connected through wireless communication.

13. The method of any one of claims 10 to 12, wherein the task response comprises information related to a size and a position of a first window comprising the execution screen of the first application and a second window comprising the execution screen of the second application.

14. The method of any one of claims 10 to 13, comprising:
in a state in which the multi-window layout is being displayed, detecting a second event triggering a change of a layout;
in response to the detection of the second event, generating a prompt comprising information related to the detected first event and a task request for requesting reconfiguration of the multi-window layout;
delivering the generated prompt to the AI model;
receiving, from the AI model, a task response comprising information related to a multi-window layout to be reconfigured in response to the second event; and
based on the received task response, reconfiguring the multi-window layout, to display the multi-window layout.

15. A computer-readable non-transitory recording medium storing instructions for performing:
executing a first application to display an execution screen of the first application;
in a state in which the first application is being executed, detecting a first event triggering a configuration of a multi-window layout according to execution of a second application;
in response to the detection of the first event, generating a prompt comprising information related to the detected first event and a task request for requesting the configuration of the multi-window layout;
delivering the generated prompt to an AI model;
receiving, from the AI model, a task response comprising information related to a multi-window layout to be configured in response to the first event; and
based on the received task response, configuring a multi-window layout comprising the execution screen of the first application and the execution screen of the second application, to display the multi-window layout.
